# EUROPEAN PATENT SPECIFICATION

(11) **EP 2 002 163 B1**
(45) Date of publication and mention of the grant of the patent: **30.05.2012**
(21) Application number: 07713380.9
(22) Date of filing: 20.03.2007
(51) Int. Cl.: F16L 11/112, F16L 11/08, F16L 11/24, B29C 53/58, D06F 58/20, F24F 13/02

(54) **SEMI-RIGID FLEXIBLE DUCT**
HALBSTARRER FLEXIBLER KANAL
CONDUITE FLEXIBLE SEMI-RIGIDE

(30) Priority: 24.03.2006 US 389623; 28.01.2007 IL 18102307
(43) Date of publication of application: 17.12.2008
(73) Proprietor: G.L.V. International (1995) Ltd., 43100 Ra'anana (IL)
(72) Inventor: LIEBSON, Steven, Ein Sarid 40697 (IL); LIEBSON, Graeme, Meshek Noiman (IL); COHEN, Robert, Meshek Noiman (IL)
(74) Representative: Dennemeyer & Associates S.A.
(86) International application number: PCT/IL2007/000362
(87) International publication number: WO 2007/110860

(56) References cited:
- EP-A1- 1 561 992
- WO-A1-98/26921
- FR-A1- 2 410 202
- FR-A1- 2 781 862
- FR-A1- 2 827 031
- US-A- 5 182 147
- US-A- 5 526 849
- US-A- 6 003 561
- US-A- 6 105 621
- US-B1- 6 527 014

## Description

### FIELD OF THE INVENTION

The present invention relates to ducts, particularly semi-rigid flexible ducts.

### BACKGROUND OF THE INVENTION

Ducts are used for different purposes, including for the conveyance of air, such as in ventilation, heating and cooling systems, or for conveying away exhaust gas from clothes dryers or other similar machines, as well as for carrying electrical cables and wiring, or other utilities.

When used for air conditioning or ventilation systems, such as within suspended ceilings, particularly in industrial and office premises, the ducts are circular and must be supported, as they have little self-support.

A further, very well know use of ducts is as an exhaust vent for clothes dryers, in which the duct is fabricated of a resilient wire helix covered with vinyl or aluminum tubing. Both type of ducts lack structural integrity, while the vinyl-covered duct is not flame resistant. The lack of structural integrity of these ducts typically results in sagging and crinking thereof, causing the duct, over time, to become lined with lint from the clothes dried in the dryer, posing a fire hazard. In the United States alone, thousands of fires associated with clothes dryers occur, causing deaths and injuries and millions of dollars in damages. It is generally recommended by clothes dryer manufacturers not to use vinyl ducts such as these for dryer exhaust transition ducts.

Representative of the prior art in ventilation systems is U.S. Patent Number 5,281,187 to Whitney, for a "Unitary Vent and Duct Assembly" which discloses a "semi-rigid flexible duct" for a ventilation system installed with a suspended ceiling structure. The duct taught in this patent is actually a solid aluminum tube which is corrugated or "accordion-folded" so that it can be compressed or compacted for storage or shipping. The corrugated aluminum tube duct taught therein, is meant to be coupled to a duct assembly of which it is an integral part, which is intended only for installation within a framed section of a suspended or dropped ceiling. However, once such a tube has been compressed and then re-extended for installation, it is unlikely to maintain its rigidity, depending on the thickness of the aluminum. A tube of this type maintains its rigidity by virtue of its being fabricated of solid metal, is heavy and expensive and can be unwieldy to install. The corrugated aluminum, when extended after compression, has significant ridges and other obtrusive topographical features along its interior due to the corrugations, which cause frictional resistance to the air flow within, a further disadvantage.

Corrugated aluminum is also employed for the exhaust vent of clothes dryers, as, for example, in U.S. Patents 5,121,948, 5,133,579, and 5,145,217, which solve the above-described problem of insufficient rigidity, but by using totally rigid segments. Even though the aluminum tubing itself is clearly fire resistant, the ridges and other internal topographical features similar to those mentioned hereinabove with respect to the Whitney patent, also cause frictional resistance to the air flow within, permitting accumulation of lint, which, as stated hereinabove, presents a fire hazard.

U.S. Patent 5,526,849, included herein by reference, to Gray for a "Flexible Duct" discloses a duct and a method for manufacture thereof. The duct disclosed therein is formed of plastic tapes wound on a rotating mandrel with a wire resilient helix and a yam helix therebetween. The duct so produced, while flame resistant, has rigidity limited to that provided by the wire helix. The additional yarn helix complicates the manufacturing process and adds to the internal topographical features of the duct, increasing friction and the possibility of lint accumulation therein, as described above.

The shape of ducts also has significance. Relatively heavy, rectangular metal ducts, formed of heavy gauge sheet metal, are often used for heating and cooling systems in industrial and office premises. A rectangular cross-sectional shape is desired due to the possibility of placing the duct against a support surface, and thereby utilizing available space more efficiently than a circular duct. These ducts are limited, however, in length, due to their relatively heavy weight and rigidity, as well as to transportation considerations. Accordingly, several lengths of these ducts may need to be joined together on site in order to provide adequate lengths of duct. It will be appreciated that they also require sufficiently strong hangers and other mechanical supports to be provided so as to provide adequate support. Furthermore, specially made corner portions must be provided to take account of bends.

A further consideration that must be taken into account when installing exhaust ducts for directing exhaust gases from machines, is the fact that the exhaust vents (or in the case of air conditioning units, the cool air supply vents) often have a square or rectangular shape, requiring somewhat unorthodox adaptive connections to conventional round ducts.

Examples of known semi-rigid, flexible ducts and methods for manufacturing same are disclosed in FR 2 781 862 A1, FR2 827 031 A1, WO 98726921 A1, and US 6 105621 A.

In FR 2 410 202 A1, there is described a semi-rigid, flexible duct according to the preamble of claim 1. A method for method for manufacturing a semi-rigid, flexible duct is also known from this document.

It is against the background, and the limitations and problems associated therewith, that the present invention has been developed.

The present invention seeks to provide a semi-rigid, multi-purpose flexible duct that is fire resistant and that is lighter in weight and less expensive than those used in the prior art, while maintaining rigidity and structural integrity, even after having been compressed to a compacted configuration for shipping and storage and then re-extended for installation. Further, the duct has minimal internal topographical features or structure, even when re-extended after having been compressed to a compacted configuration for shipping and storage.

A further aim of the present invention is to provide a semi-rigid, multi-purpose flexible duct having a cross-scctional configuration which may be round, square or rectangular according to need, and which may be used for such diverse uses as gas transport, for example in air conditioning systems or as a gas dryer duct; and the enclosure of utility pipes and cables in an isolated and low-fire-hazard environment

The present invention further seeks to provide a method for manufacturing such a duct that is simple, fast, and efficient.

To achieve this, the semi-rigid, flexible duct of the invention is characterized by the features claimed in the characterizing part of claim 1, and the invention provides a method for manufacturing a semi-rigid, flexible duct according to claim 1].

There is thus provided, a semi-rigid, flexible duct, which, in accordance with the present invention, may be used for gas transport, such as in cooling or heating systems or for machine exhausts, including but not limited to clothes dryers. It may further be used for enclosing utility lines, such as water, gas, electricity, and telecommunications, particularly when the duct is employed in its rectangular configuration. The duct of the present invention, when formed so as to have a rectangular cross-section, may easily be disposed between two leaves of a hollow wall construction, beneath a suspended wooden or other floor, and within a suspended ceiling, so as to provide an efficient, lightweight yet secure, and easily installable manner of passing utility lines behind, beneath or below building elements.

The duct of the invention includes a pair of coaxial sleeves, including an inner sleeve and an outer sleeve disposed parallel to and about the inner sleeve, and a resilient helical element disposed between them;
wherein each of the inner sleeve and the outer sleeve includes a first layer having metallic properties and one or both of which further include a second, plastic layer bonded to the first layer having metallic properties;
wherein the helical element imparts helical corrugations to the inner sleeve and the outer sleeve, such that the duct is axially extendible between a compacted configuration suitable for storage and for shipping and an extended configuration;
and wherein all the layers of both the inner sleeve and the outer sleeve are of a thickness predetermined to together render the duct substantially rigid when in the extended configuration and to together enable the duct to maintain its substantial rigidity upon extension from the compacted configuration.

When a predetermined length of the duct is in the extended configuration and is disposed horizontally and supported at a first end thereof, the duct is fabricated to bend under the influence of gravitational force such that a second unsupported end thereof is lower than the first supported end by no more than a predetermined percentage of the predetermined length. Further, when a predetermined length of the duct is in the extended configuration and is disposed horizontally and supported at both ends thereof, the duct is fabricated to bend under the influence of gravitational force such that the central portion thereof is also lower than the level of the supported ends by no more than a predetermined percentage of the predetermined length, which, for a 2 meter length of a duct with a diameter of approximately 10 centimeters, will be less than 1 centimeter for an extended duct that was not compacted and less than 5 centimeters for a duct that was extended from the compacted configuration. Additionally, when the duct is in the extended configuration after having been compressed to the compacted configuration, the inward-facing surface of the first layer having metallic properties of the inner sleeve is substantially smooth and featureless except for the helical corrugations.

Further, both the inner sleeve and the outer sleeve include a first layer having metallic properties and a second, plastic layer, forming thereby, respectively, an inner two-layer laminate and an outer two-layer laminate, which are fabricated of fire-resistant and puncture-resistant materials. In all of the two-layer laminates, the layers are bonded together with a fire-retardant adhesive and the inner two-layer laminate is also bonded to the outer two-layer laminate with a fire-retardant adhesive.

Additionally, the first layers having metallic properties of the inner two-layer laminate and the outer two-layer laminate are fabricated of aluminum ribbon of predetermined thicknesses and the second, plastic layers of the inner two-layer laminate and the outer two-layer laminate are fabricated of polyester ribbon of predetermined thicknesses, respectively bonded together to form thereby, respectively, an inner two-layer laminated tape of predetermined thickness and an outer two-layer laminated tape of predetermined thickness, and wherein the inner two-layer laminate is an inner helical wrapping with a predetermined overlap of the inner two-layer laminated tape and the outer two-layer laminate is an outer helical wrapping with a predetermined overlap of the outer two-layer laminated tape.

Further, in the inner sleeve, the second plastic layer is disposed parallel to and about the first layer having metallic properties and in the outer sleeve, the first layer having metallic properties is disposed parallel to and about the second plastic layer. The first layer having metallic properties of the inner two-layer laminate is fabricated of aluminum ribbon of a thickness in the range 6 to 12 microns, and the first layer having metallic properties of the outer two-layer laminate is fabricated of aluminum ribbon of a thickness in the range 24 to 35 microns. The second plastic layers of both the outer and inner two-layer laminates are fabricated of polyester ribbon of a thickness in the range 10 to 14 microns.

Additionally, the resilient helical element is fabricated of a metal having spring-like resilience, such as, a wound bronze-coated steel wire of a diameter in the range 0.9 to 1.3 millimeters.

Further, in accordance with a preferred embodiment of the invention, the resilient helical element is aligned with the inner wound wrapping so that the wound bronze-coated steel wire is approximately centered over the overlap of the inner helical wrapping of the inner two-layer laminated tape and the outer helical wrapping of the outer two-layer laminated tape is aligned with the resilient helical element so that the overlap of the outer helical wrapping of the outer two-layer laminated tape is approximately centered over the spaces between the wires of the wound bronze-coated steel wire of the resilient helical element.

In accordance with a further embodiment of the invention, the duct also includes an insulating sheath fabricated of fiberglass, disposed parallel to and about the outer sleeve, and an enclosing jacket disposed parallel thereto and thereabout. The enclosing jacket is a multi-layer jacket including a tubular, plastic inner wrapping and a two-layer laminate outer wrapping, including a plastic inner layer and an outer layer having metallic properties, bonded together with a fire-retardant adhesive, disposed parallel and about the tubular, plastic inner wrapping and bonded thereto with a fire-retardant adhesive. The plastic inner wrapping is fabricated of polyester ribbon of predetermined thickness, and the plastic inner layer of the two-layer laminate outer wrapping is fabricated of polyester ribbon of predetermined thickness and the outer layer having metallic properties of the two-layer laminate outer wrapping is fabricated of aluminum ribbon of predetermined thickness. The insulating sheath is fabricated of fiberglass of a thickness in the range 25 to 50 millimeters. The plastic inner wrapping is fabricated of polyester ribbon of a thickness in the range 10 to 14 microns. The plastic inner layer of the two-layer laminate outer wrapping is fabricated of polyester ribbon of a thickness in the range 10 to 14 microns, and the outer layer having metallic properties of the two-layer laminate outer wrapping is fabricated of aluminum ribbon of a thickness in the range 6 to 9 microns.

The duct may serve as a gas transport duct or as a duct for enclosing utility supply lines, and has a cross-sectional configuration which may be circular or polygonal, such as square or rectangular.

There is further provided, in accordance with the present invention, a method for manufacturing a semi-rigid, flexible duct which includes the steps of:
a) providing a mandrel of preselected diameter for fabricating a duct therearound;
b) combining a first aluminum continuous ribbon of predetermined thickness with a first polyester continuous ribbon of predetermined thickness to form a first two-layer laminated continuous tape;
c) combining a second aluminum continuous ribbon of predetermined thickness with a second polyester continuous ribbon of predetermined thickness to form a second two-layer laminated continuous tape;
d) wrapping the first two-layer laminated continuous tape with a predetermined overlap around the mandrel with the first aluminum ribbon facing inward toward the mandrel and the first polyester ribbon facing outward with respect to the mandrel to form an inner two-layer sleeve;
e) winding a wire around the inner two-layer sleeve; and
f) wrapping the second two-layer laminated continuous tape with a predetermined overlap around the inner two-layer sleeve and the bronze-coated steel wire winding with the second polyester ribbon facing inward toward the mandrel and the second aluminum ribbon facing outward with respect to the mandrel to form an outer two-layer sleeve disposed parallel to and about the inner two-layer sleeve, thereby to form a duct.

Additionally, the step b) of combining a first aluminum ribbon includes the sub-step of applying a fire-retardant adhesive between the first aluminum ribbon and the first polyester ribbon to bond them together; and the step c) of combining a second aluminum ribbon includes the sub-step of applying a fire-retardant adhesive between the second aluminum ribbon and the second polyester ribbon to bond them together. Further, the step of b) combining a first aluminum ribbon further includes the sub-step of coating the polyester face of the first two-layer laminated continuous tape with a fire-retardant adhesive; the step c) of combining a second aluminum ribbon further includes the sub-step of coating the polyester face of the second two-layer laminated continuous tape with a fire-retardant adhesive; and in the step d) of wrapping the second two-layer laminated continuous tape, the outer two-layer sleeve is bonded to the inner two-layer sleeve with the bronze-coated steel wire winding therebetween.

Additionally in accordance with the method of the present invention, the step e) of winding a wire includes the sub-step of aligning the wound wire with the overlap of the first two-layer laminated continuous tape so that the wound wire is approximately centered over the overlap of the first two-layer laminated continuous tape, and the step f) of wrapping the second two-layer laminated continuous tape includes the sub-step of aligning the second two-layer laminated continuous tape so that the overlap thereof is approximately centered over the spaces between the windings of wire.

Further in accordance with the method of the present invention, the steps d), e), and f) of wrapping the first two-layer laminated continuous tape, winding the bronze-coated steel wire, and wrapping the second two-layer laminated continuous tape are performed by rotating the mandrel as the first two-layer laminated continuous tape, the bronze-coated steel wire, and the second two-layer laminated continuous tape are respectively deposited thereupon; and the steps d), e), and f) of wrapping the first two-layer laminated continuous tape, winding the bronze-coated steel wire, and wrapping the second two-layer laminated continuous tape are performed continuously and simultaneously with predetermined phase differences, with respect to the rotation of the mandrel, therebetween. Namely, the steps d) and e) of wrapping the first two-layer laminated continuous tape and winding the bronze-coated steel wire are performed continuously and simultaneously with a phase difference of 360 degrees, with respect to the rotation of the mandrel, therebetween; and the steps e) and f) of winding the bronze-coated steel wire and wrapping the second two-layer laminated continuous tape are performed continuously and simultaneously with a phase difference of 120 degrees, with respect to the rotation of the mandrel, therebetween.

In accordance with an additional embodiment of the present invention, the method further includes, after the step f) of wrapping the second two-layer laminated continuous tape, the steps of:
g) sheathing the outer two-layer sleeve with a fiberglass insulating sheath of a thickness in the range 25 to 50 millimeters, disposed parallel thereto and thereabout; and
h) enveloping the insulating sheath with an enclosing jacket.
Additionally, the step h) of enveloping includes the following sub-steps:
1) providing a mandrel of preselected diameter for fabricating the enclosing jacket therearound;
2) combining a polyester continuous ribbon of predetermined thickness with an aluminum continuous ribbon of predetermined thickness to form a two-layer laminated continuous tape;
3) wrapping a polyester continuous ribbon of predetermined thickness around the mandrel to form an inner plastic sleeve; and
4) wrapping the two-layer laminated continuous tape around the inner plastic sleeve with the polyester ribbon facing inward toward the mandrel and the aluminum ribbon facing outward with respect to the mandrel to form an outer two-layer sleeve disposed parallel to and about the inner plastic sleeve.

The sub-step 2) of combining includes the sub-sub-step of applying a fire-retardant adhesive between the polyester ribbon and the aluminum ribbon to bond them together, and the sub-step 3) of wrapping a polyester ribbon includes the sub-sub-step of coating the outer face of the inner plastic sleeve with a fire-retardant adhesive to bond it to the two-layer laminated tape.

Additionally, the sub-steps 3) and 4) of wrapping a polyester ribbon and wrapping the two-layer laminated tape are performed by rotating the mandrel as the polyester ribbon and the two-layer laminated tape are respectively deposited thereupon. Further, the sub-steps 3) and 4) of wrapping a polyester ribbon and wrapping the two-layer laminated tape are performed continuously and simultaneously with a predetermined phase difference, namely, of 360 degrees, with respect to the rotation of the mandrel, therebetween.

In accordance with a preferred embodiment of the present invention, the method further includes in step f) of winding, the additional step of imparting to at least a portion of the duct, a polygonal cross-sectional configuration, such as square or rectangular.

### BRIEF DESCRIPTION OF THE DRAWINGS

The present invention will be more fully understood and appreciated from the following detailed description, taken in conjunction with the drawings, in which:
Fig. 1 is a side view of a portion of a duct having a circular cross-sectional configuration, constructed and operative in accordance with an embodiment of the present invention;
Fig. 2 is a schematic, dimensionally exaggerated cross-sectional view of the duct of Fig. 1;
Fig. 3 is a schematic oblique view of a segment of a duct that has been compressed;
Fig. 4 is a schematic oblique view of a duct similar to that shown in Fig. 1, further including an insulating sheath, constructed and operative in accordance with a further embodiment of the present invention;
Fig. 5 is a schematic, dimensionally exaggerated cross-sectional view of the duct of Fig. 4;
Fig. 6 is a schematic view of a duct, constructed and operative in accordance with an embodiment of the present invention, which is installed as an exhaust transition duct of a clothes dryer;
Fig. 7 is a schematic axial view of a duct such as that of Fig. 1 being fabricated according to the method of the present invention;
Fig. 8 is an enlarged detailed, schematic, dimensionally exaggerated, cross-sectional view of a portion of the wall of a duct such as that of Fig. 1;
Fig. 9 is a schematic axial view of an enclosing jacket such as that of Fig. 5 being fabricated according to the method of the present invention;
Fig. 10 is a schematic representation of the vertical sag of the unsupported center of a segment of duct such as that of Fig. 1 supported at its ends;
Fig. 11 is a schematic representation of the vertical displacement from the horizontal of the unsupported end of a segment of duct such as that of Fig. 1 supported at its other end;
Fig. 12 is a schematic representation of the fabrication of an insulated duct such as that of Fig. 5;
Fig. 13A is a side view of a portion of a duct having a square cross-sectional configuration, constructed and operative in accordance with a further embodiment of the present invention;
Fig. 13B is a schematic dimensionally exaggerated cross-sectional view of the duct of Fig. 13A;
Fig. 14A is a schematic oblique view of a duct similar to that shown in Fig. 13A, but having an insulating sheath, constructed and operative in accordance with yet a further embodiment of the present invention;
Fig. 14B is a schematic dimensionally exaggerated cross-sectional view of the duct of Fig. 14A;
Fig. 15A is a pictorial representation of a square section gas transport duct;
Fig. 15B is a pictorial representation of a rectangular section utility line duct;
Fig. 15C is a pictorial representation of a compound duct;
Fig. 16 is a schematic representation of the fabrication of the insulated polygonal duct illustrated in Figs. 14A and 14B;
Fig. 17A is a schematic diagram of apparatus for imparting a selected polygonal cross-sectional configuration to a circular duct;
Fig. 17B is an enlarged schematic representation of the apparatus identified as B in Fig. 17A; and
Fig. 17C is an end view of the apparatus illustrated in Fig. 17B.

### DETAILED DESCRIPTION OF THE INVENTION

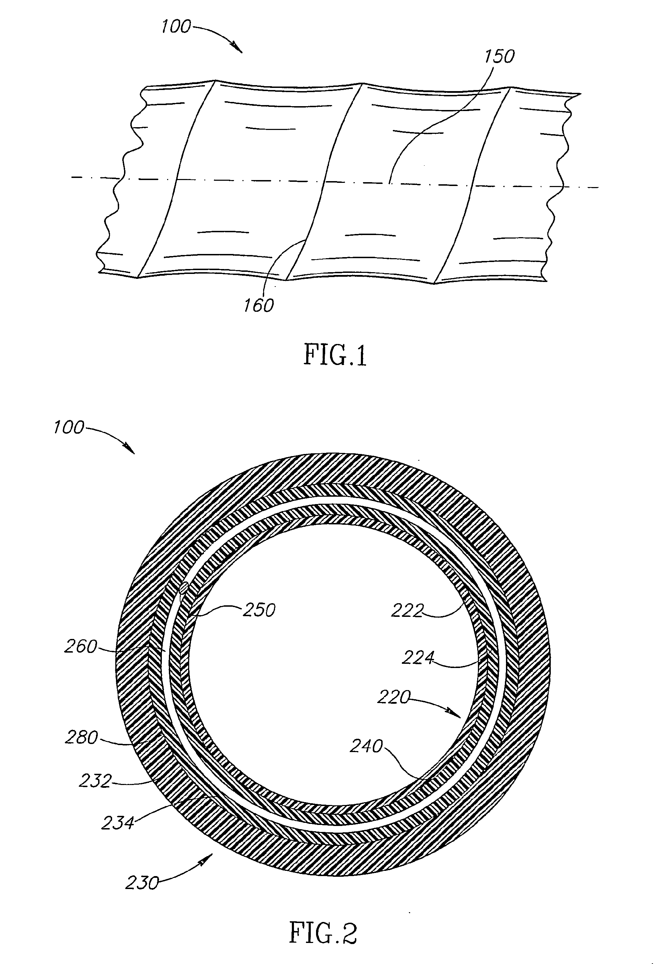

Referring now to the drawings, there are shown, in Fig. 1, a side view of a segment of a duct, referred to generally as 100, constructed and operative in accordance with a preferred embodiment of the present invention, and a schematic axial cross-sectional view thereof in Fig. 2. In the present embodiment, duct 100, which may be used for gas transport or for enclosing utility lines, is cylindrical, having an axis 150, and is of multi-layer construction, as shown in detail in Fig. 2.

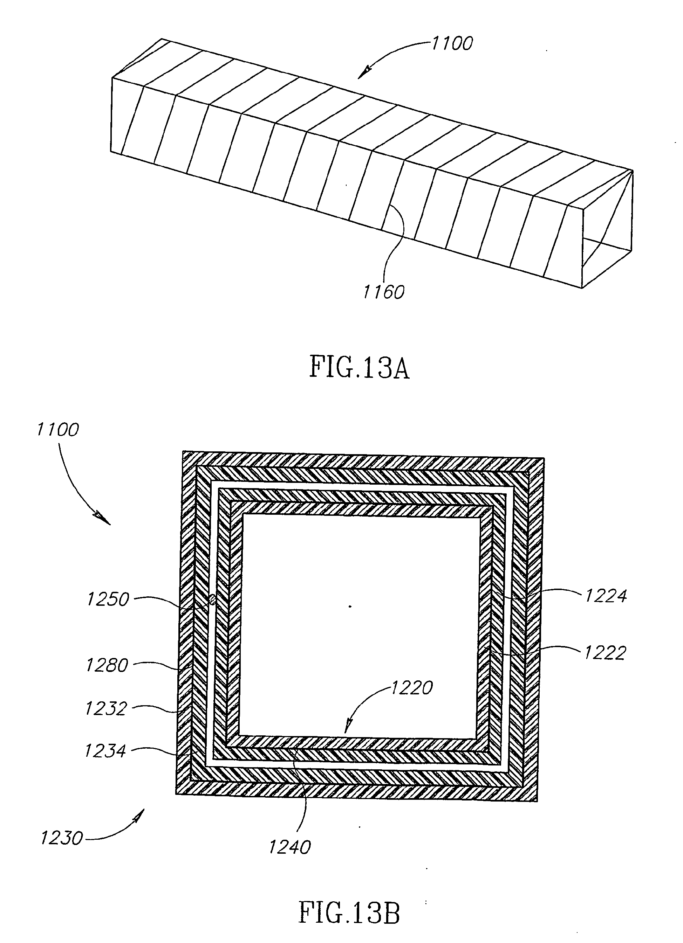

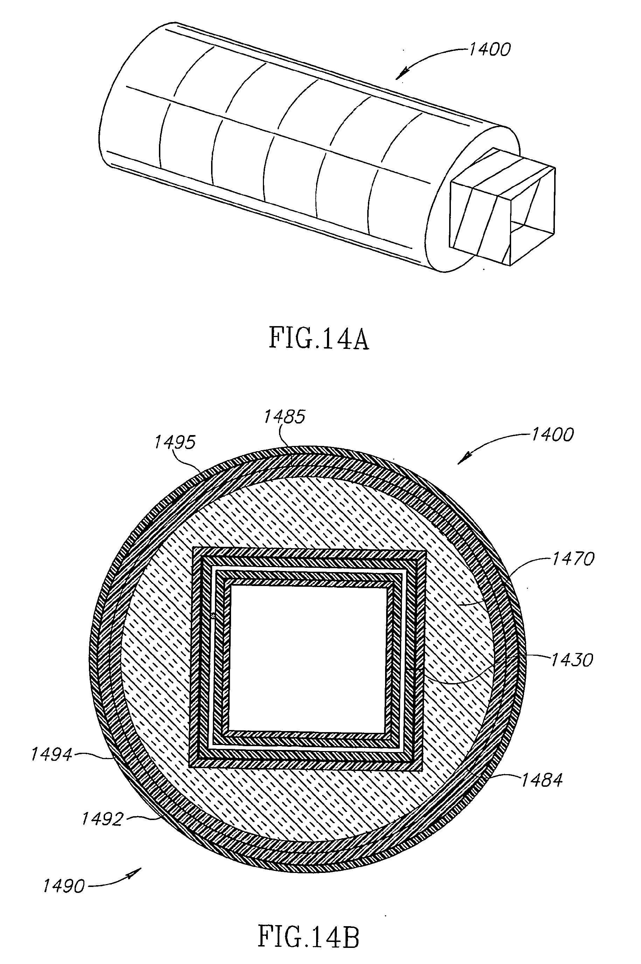

In accordance with the present invention, the specific description below of cylindrical duct 100 applies equally to non-cylindrical ducts, such as non-insulated square duct 1100 (Figs. 13A-13B) and insulated square duct 1400 (Figs. 14A-14B), as well as variations thereof, all as described hereinbelow.

By way of clarification, the term "helical," and variations thereof, derives from the description of the manufacture of the ducts of the invention, and relates to the act of winding various elements in a spiral or helix. In the embodiments of the invention in which the duct remains cylindrical, the helical windings clearly remain helical. In those polygonal embodiments of the invention however, the windings, while not being strictly helical, retain a general square-helical arrangement, and may be referred to as such, although mainly they are referred to merely as "windings" or "wound."

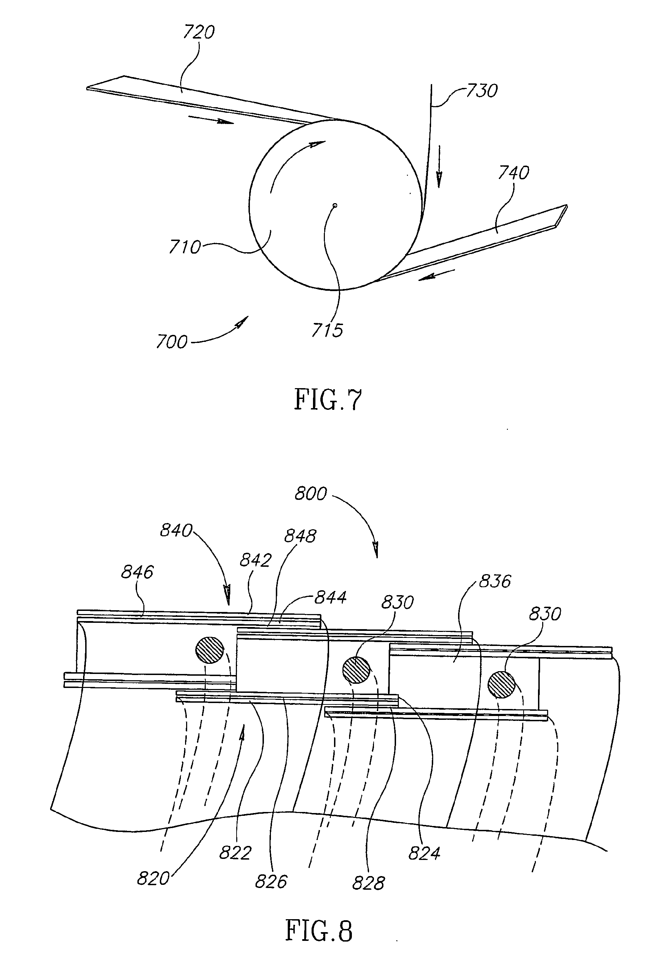

Duct 100 has inner and outer sleeves, referenced 220 and 230, respectively, which are coaxial and are of a laminate construction, each preferably being formed of a wound helical wrapping of a two-layer laminated tape formed of two layers of ribbon, 222, 224, and 232, 234, respectively, bonded together with an adhesive layer 240, 280. Inner sleeve 220 has an internal layer of aluminum ribbon 222 and an external layer of polyester ribbon 224 bonded together with adhesive layer 240 to form a two-layer laminated tape which is helically wound around a mandrel (710, see Fig. 7, discussed hereinbelow) to form inner sleeve 220. Coaxially wound around inner sleeve 220 is a wound helical wire 250, preferably of bronze-coated steel, disposed and encapsulated between inner sleeve 220 and outer sleeve 230 with a layer of adhesive 260. Outer sleeve 230 is fabricated in a manner similar to inner sleeve 220, but wherein, the helically wound two-layer laminated tape has an internal layer of polyester ribbon 234 and an external layer of aluminum ribbon 232, bonded together with adhesive layer 280. The wound bronze-coated steel wire 250 imparts corresponding corrugations 160 to duct 100, as can be seen in Fig. 1.

Polyester ribbon layers 224 and 234 are both heat resistant and fire retardant and further are made thick enough to contribute to the rigidity and structural integrity of duct 100 together with aluminum ribbon layers 222 and 232, which, being metallic, are fireproof as well. The adhesive employed in adhesive layers 240, 260, and 280 is also heat resistant and fire retardant. It should be noted that polyester ribbon layers 224 and 234 are also puncture resistant, which is a further advantage of the duct 100 of the present invention.

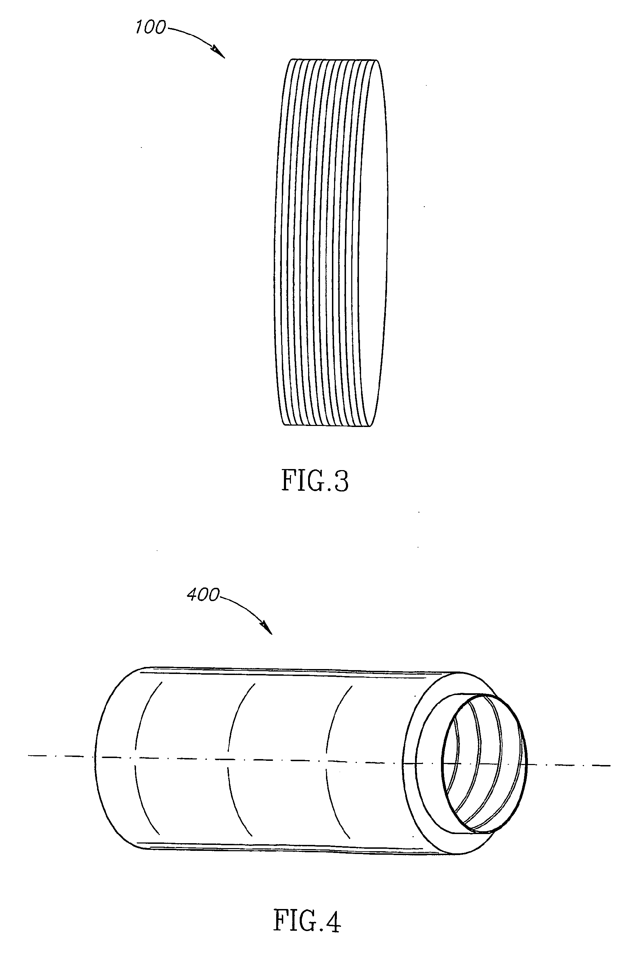

Duct 100 is manufactured fully extended by a continuous process, further described hereinbelow, and is then cut to a desired length. The corrugations 160 imparted thereto by wound helical wire 250 allow duct 100 to be axially compressed into a compact configuration convenient for storage or shipping. When duct 100 is compressed, as shown in Fig. 3, aluminum layers 222 and 232 and polyester layers 224 and 234 naturally fold between the ridges (referenced 160 in Fig. 1) created by wound helical wire 250. For example, a 2.4 meter length of 10 centimeter diameter duct fabricated in accordance with the present invention can be compressed to a length of approximately 15 centimeters, which is comparable to the compression of simple prior art ducts described hereinabove that do not have the advantages and improvements of the present invention.

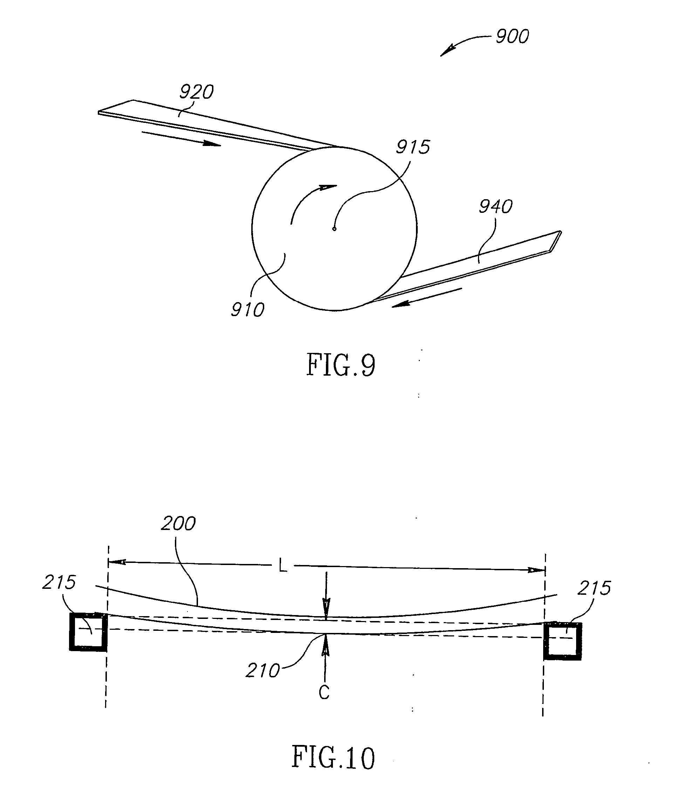

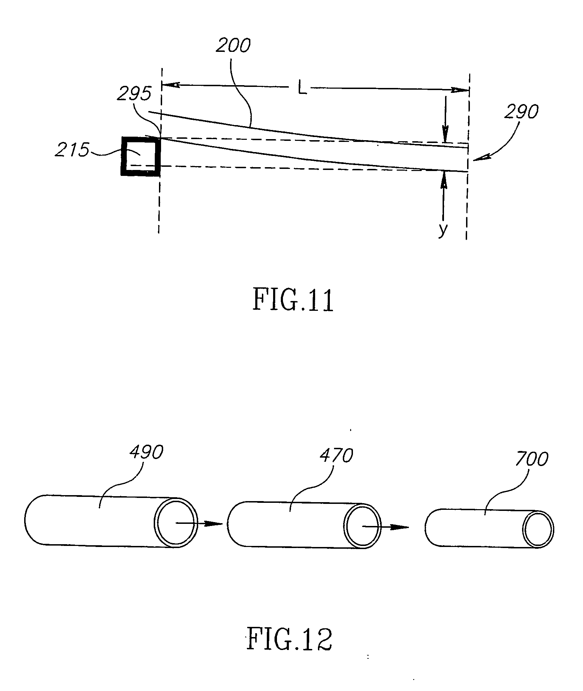

A particular advantage of the unique, multilayered construction of the present invention is that duct 100 maintains its rigidity and structural integrity and functions like a totally rigid duct even after having been compressed to its compact configuration and re-extended to its original length. Referring now to Fig. 10, there is shown, schematically, the vertical sag c of the unsupported center 210 of a horizontal segment of duct 200 spanning between two supports 215 a distance L apart. For example, for a length of duct that has been returned to its extended configuration after having been compressed, a 1.5 meter horizontal span of 10 centimeter diameter duct with no support in its center will substantially maintain its rigid shape and sag in the unsupported center by no more than 1 centimeter, while a similar 2 meter horizontal span of 10 centimeter diameter duct will sag in the unsupported center by no more than 5 centimeters. For a length of duct 100 that has not been compressed, a 1.5 meter horizontal span of 10 centimeter diameter duct that has no support in its center will maintain its rigid shape with negligible sag, while a 2 meter horizontal span of 10 centimeter diameter duct will sag in the unsupported center by no more than 1 centimeter. Referring now to Fig. 11, there is shown, schematically, the vertical displacement y from the horizontal of one unsupported end 290 of a horizontal segment of duct 200 of length L, as a result of bending due to gravity, when the other end 295 has support 215. Similarly, a vertically deployed segment of the duct of the present invention will maintain its rigidity, and not sag or collapse, even when returned to its extended configuration after having been compressed. As will be clear to those familiar with the art, these features represent a major improvement over the prior art, including solid aluminum corrugated tubes such as those employed in the invention of the Whitney patent (U.S. Patent Number 5,281,187) discussed hereinabove.

Another advantage of the unique multilayered construction of the present invention is that when it is fully extended after compression, the inward-facing surface of the aluminum layer 222 of the inner sleeve 220 is substantially smooth and featureless except for the helical corrugations imparted by wire winding 250. This reduces frictional resistance to air flow within the duct, and, for clothes dryer exhaust transition ducts, significantly impedes the accumulation of lint inside the duct, thereby greatly reducing the fire hazard cited hereinabove with respect to the prior art.

Referring again to Fig. 2, in a preferred embodiment of the present invention in a typical product of the invention, duct 100 may have the following exemplary dimensions. The two-layer laminated tape of inner sleeve 220 has an inner aluminum ribbon layer 222 that is 7 microns thick and a polyester ribbon layer 224 that is 12 microns thick, so that, with the adhesive 240, inner sleeve 220 has a thickness of 21 microns. The wire helix 250 is a 0.9 mm diameter bronze-coated steel wire. The two-layer laminated tape of outer sleeve 230 has an outer aluminum ribbon layer 232 that is 25 microns thick and a polyester ribbon layer 234 that is 12 microns thick, so that, with the adhesive 280, outer sleeve 230 has a thickness of 39 microns. The use of the thinner (7 microns) aluminum ribbon layer 222 in inner sleeve 220 contributes to the above-mentioned smoothness of the inner surface of duct 100. It should be noted that the above-mentioned dimensions are typical and are exemplary of a preferred embodiment of the present invention, and that the present invention is not limited thereto. It should further be noted that, with suitable dimensions for the other layers of the duct of the present invention, either polyester layer 224 of inner sleeve 220 or polyester layer 234 of outer sleeve 230 may be omitted without loss of the improvements in rigidity of the present invention, albeit at a cost of additional thickness of aluminum, resulting in additional weight and expense. As such, either of these alternative configurations should be considered as being included in the present invention, as well as alternative dimensions of the layers that can still provide the desired performance of duct 100. Similarly, metallic layers or plastic layers fabricated of materials having properties comparable to those of the aluminum and polyester layers described hereinabove should also be considered as being included in the present invention.

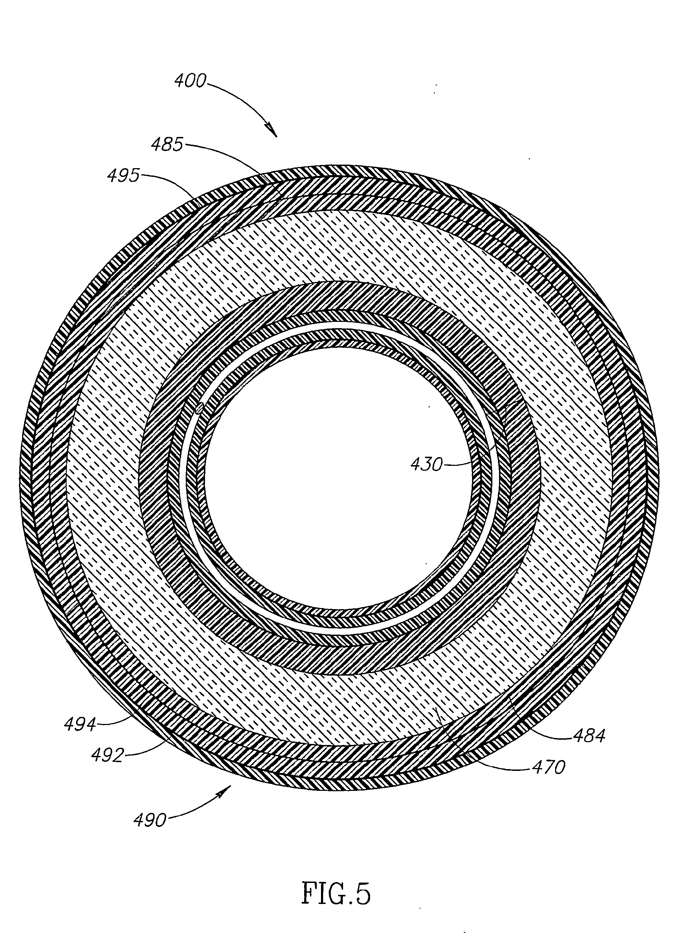

Referring now to Fig. 4. there is shown a schematic oblique view of a segment of a duct, referred to generally as 400. A schematic axial cross-sectional view of duct 400 is shown in Fig. 5. As shown in Fig. 5, duct 400 is similar to that shown in Fig. 1, but also includes an insulating layer 470 disposed parallel to and about outer sleeve 430 constructed and operative in accordance with a further preferred embodiment of the present invention. Additionally, insulating layer 470 has an enclosing jacket serving as a vapor barrier, referred to generally as 490, disposed thereabout. Insulating layer 470 is typically fabricated of fiberglass, which provides the desired insulation and is fire resistant. Enclosing jacket 490 is formed of an inner helical winding of polyester ribbon 484, bonded with a layer of heat and fire retardant adhesive 485 and an outer helical winding of a two-layer laminated tape having an inner layer of polyester ribbon 494 and an outer layer of aluminum ribbon 492 bonded together by a heat resistant and fire retardant adhesive 495.

In a preferred embodiment of the present invention, insulating layer 470 and enclosing jacket 490 of duct 400 have the following dimensions. Depending on the application, insulating layer 470 typically may be either 25 or 50 millimeters in thickness. The wrapping of polyester ribbon 484 is 12 microns thick. The two-layer laminated tape of the outer helical winding has an inner polyester ribbon layer 494 that is 12 microns thick and an outer aluminum ribbon layer 492 that is 7 microns thick, so that, with the adhesive 495, outer helical winding has a thickness of 21 microns. It should be noted that the above-mentioned dimensions are typical and are exemplary of a preferred embodiment of the present invention, and that the present invention is not limited thereto.

Enclosing jacket 490 is manufactured by a continuous process, similar to that of duct 100, and is then cut to a desired length. Duct 400 is assembled from an insulating layer 470 cut to the desired length and an enclosing jacket 490 cut to the desired length, which are drawn onto a segment of uninsulated duct, similar to duct 100, cut to the desired length.

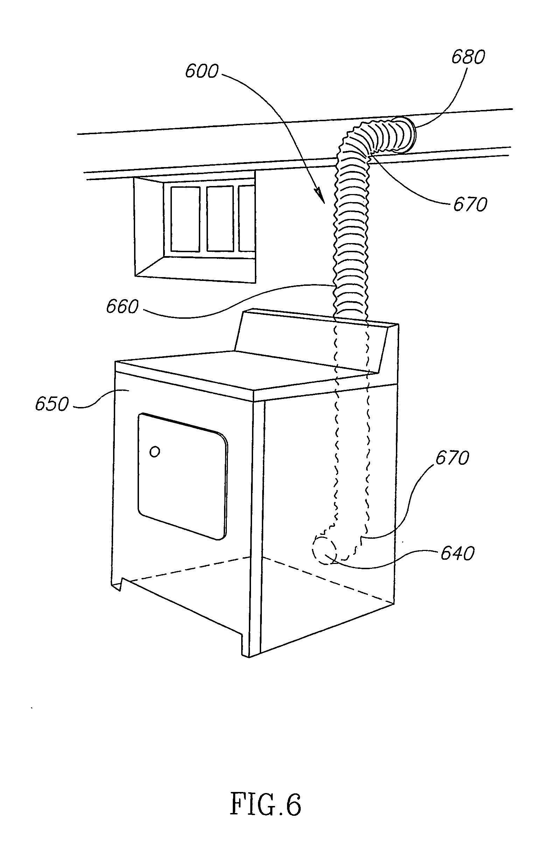

Referring now to Fig. 6, there is shown a schematic view of a duct 600, constructed and operative in accordance with an embodiment of the present invention, installed as an exhaust transition duct of a clothes dryer 650. Duct 600 is connected to dryer exhaust port 640 and has a vertical segment 660 and two right angle bends 670 connecting it to an outside exhaust port 680, thereby allowing it to vent the exhaust gases of clothes dryer 650. The features of the present invention discussed hereinabove, notably the rigidity and structural integrity and the reduced tendency to accumulate lint are particularly advantageous in applications such as this.

The advantageous properties of the duct of the present invention result both from its unique construction described hereinabove and from the method of manufacture thereof. Referring now to Fig. 7, there is shown a schematic axial view of a duct, referred to generally as 700, in accordance with the present invention being fabricated according to the method of the present invention. The size of the duct 700 being fabricated is determined by mandrel 710 which is rotated about its longitudinal axis 715. Inner two-layer laminate tape 720 is helically wound with a predetermined overlap 828 (Fig. 8) around mandrel 710 as it turns to produce the two-layer inner sleeve of duct 700 as a first step in forming duct 700. Bronzed-coated steel wire 730 is helically wound around the two-layer inner sleeve of duct 700 as mandrel 710 turns with the two-layer inner sleeve formed thereupon. Outer two-layer laminate tape 740 is helically wound with a predetermined overlap 848 (Fig. 8) around the two-layer inner sleeve of duct 700 with bronzed-coated steel wire 730 wound thereabout as mandrel 710 turns with the two-layer inner sleeve and the wire wound thereupon to produce the two-layer outer sleeve of duct 700.

Referring now to Fig. 8, there is shown an enlarged detailed schematic cross-sectional view of a portion of the wall of a duct, referred to generally as 800, constructed in accordance with the present invention, being fabricated according to the method of the present invention. Inner two-layer laminate tape, referred to generally as 820, is formed by combining an aluminum ribbon 822 with a polyester ribbon 824 by applying a fire-retardant adhesive 826 therebetween to bond them together. Similarly, outer two-layer laminate tape, referred to generally as 840, is formed by combining a polyester ribbon 844 with an aluminum ribbon 842 by applying a fire-retardant adhesive 846 therebetween to bond them together. It should be noted that inner two-layer laminate tape 820 and outer two-layer laminate tape 840 are both prepared prior to their being helically wound around mandrel 710 (Fig. 7) to fabricate duct 800, and that inner two-layer laminate tape 820 is wrapped around the mandrel with the aluminum ribbon 822 side inward toward the mandrel and outer two-layer laminate tape 840 is wrapped around the mandrel with the polyester ribbon 844 side inward toward the mandrel. It should further be noted that inner two-layer laminate tape 820 and outer two-layer laminate tape 840 are each respectively helically wound with a predetermined partial overlap, 828 and 848 respectively, so that successive wrappings produce continuous inner and outer two-layer sleeves. Additionally, it should be noted that the wires of wire winding 830 are aligned approximately centered above the overlap 828 in inner two-layer laminate tape 820, and the overlap 848 in outer two-layer laminate tape 840 is aligned approximately centered above the spaces between the wires of wire winding 830, which has been found to enhance the strength and rigidity of duct 800. Prior to inner two-layer laminate tape 820 and outer two-layer laminate tape 840 being helically wound around the mandrel to fabricate duct 800, the outer, polyester ribbon 824 side of inner two-layer laminate tape 820 and the inner, polyester ribbon 844 side of outer two-layer laminate tape 840 are coated with a fire-retardant adhesive, such as with a rolling adhesive applicator, thereby allowing them to be bonded together with an adhesive layer 836 which also encapsulates bronzed-coated steel wire winding 830 therebetween, when all are wound around mandrel 710 (Fig. 7) so as to fabricate duct 800.

Returning now to Fig. 7, it can be seen that both inner two-layer laminate tape 720 and outer two-layer laminate tape 740, as well as bronzed-coated steel wire 730, are all continuously and simultaneously wrapped and wound, respectively, around mandrel 710 as it rotates. The wrappings and the winding, while occurring simultaneously, are performed with predetermined phase differences, with respect to the rotation of mandrel 710, between them. Thus, duct 700 is fabricated in one continuous operation. In an exemplary preferred embodiment of the present invention, the phase difference between the wrapping of inner two-layer laminate tape 720 and the winding of bronzed-coated steel wire 730 is 360 degrees or one complete rotation of mandrel 710, and the phase difference between the winding of bronzed-coated steel wire 730 and the wrapping of outer two-layer laminate tape 740 is 120 degrees or one third of a complete rotation of mandrel 710 about axis 715.

For the insulated duct 400 of Figs. 4 and 5, enclosing jacket 490 is fabricated by a process analogous to that used to fabricate duct 700 described hereinabove. Referring now to Fig. 9, there is shown a schematic axial view of an enclosing jacket, referred to generally as 900, in accordance with the present invention being fabricated according to the method of the present invention. A two-layer laminate tape 940 with an inner polyester ribbon layer and an outer aluminum ribbon layer bonded with a fire-retardant adhesive is formed. A continuous inner plastic sleeve is produced by helically winding a polyester ribbon 920 around a rotating mandrel 910 of the desired diameter, and a continuous outer two-layer sleeve is produced by helically winding the two-layer laminate tape 940 around the inner plastic sleeve as the mandrel rotates, with a fire-retardant adhesive layer applied therebetween. Further as described hereinabove, enclosing jacket 900 is produced in one continuous operation, with continuous inner plastic sleeve and outer two-layer sleeve both wrapped around mandrel 910 continuously and simultaneously, with only a specific phase difference, with respect to the rotation of mandrel 910, between them. In a preferred embodiment of the present invention, the phase difference between the wrapping of the inner plastic sleeve and that of the outer two-layer sleeve is 360 degrees or one complete rotation of mandrel 910 about axis 915. In additional embodiments of the present invention, an additional tape of open-mesh laid fiberglass scrim may be wrapped between polyester ribbon 920 and two-layer laminate tape 940 in enclosing jacket 900 (not pictured).

To produce insulated duct 400 (Figs. 4 and 5), a piece of continuously produced uninsulated duct 700 (Fig. 7) is cut to the desired length, and a piece of continuously produced enclosing jacket 490 (Fig. 5) is cut to the desired length. As shown schematically in Fig. 12, the desired length piece of enclosing jacket 490, together with an insulating fiberglass sheath 470 of the desired length and suitable inner and outer diameters, are drawn over the desired length piece of uninsulated duct 700 to produce the insulated duct 400 shown in Figs. 4 and 5.

Referring now to Figs. 13A-15C, there are provided ducts which are generally similar to those shown and described above in conjunction with Figs. 1-11, and which have similar characteristics of strength, durability, puncture resistance and fire resistance, and thus are not specifically described again herein, save with reference to the differences between the ducts previously illustrated and those described hereinbelow. Accordingly, and for the sake of ease of reference, the ducts illustrated in Figs. 13A-15B, as well as portions thereof, are generally denoted by reference numerals which are the same as those used to indicate their respective counterpart ducts and portions thereof in Figs. 1-11, but with the addition of the prefix "1." Thus, by way of example, the non-insulated duct illustrated in Figs. 13A-13B is referenced 1100, and the insulated duct illustrated in Figs. 14A-14B is referenced 1400.

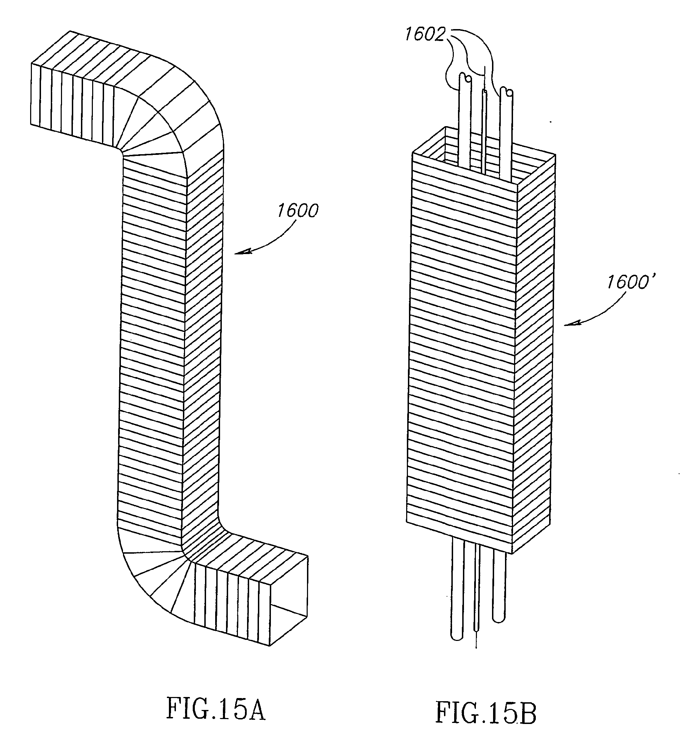

Referring now initially to Figs. 13A-13B, duct 1100 is a non-insulated polygonal duct, generally similar to that shown and described hereinabove in conjunction with Figs. 1-2. Typically, it may be a square section duct used for gas transport, such as for ventilation, cooling, and heating systems, or for an exhaust system, as illustrated in Fig. 15A at 1600.

Referring now to Figs. 14A-14B, duct 1400 is an insulated polygonal duct, generally similar to that shown and described hereinabove in conjunction with Figs. 4-5. Typically, and as seen in Fig. 15B, it may be a rectangular section duct 1600', used for utility lines 1602, such as electricity communications, gas, or water.

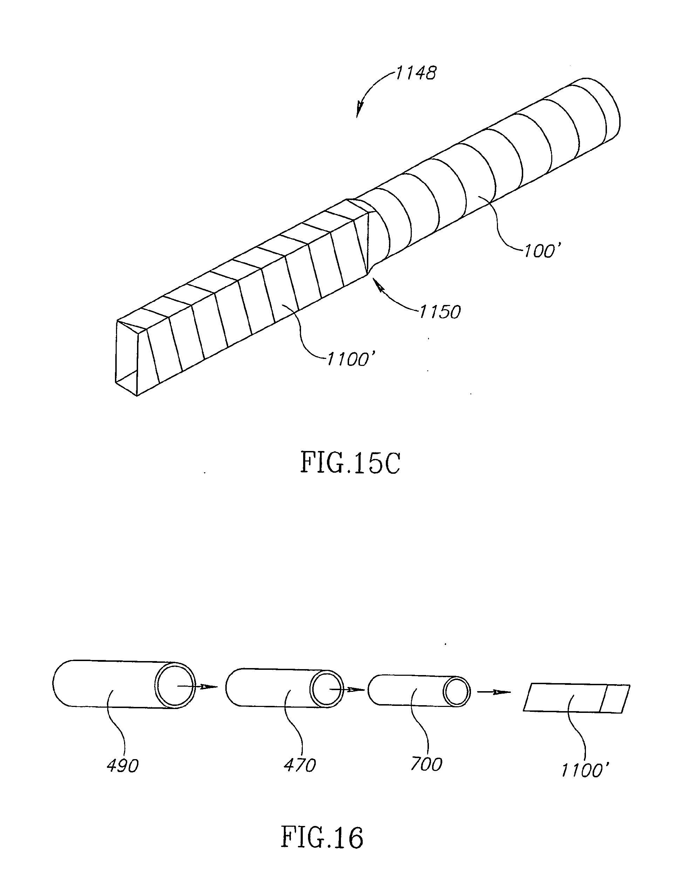

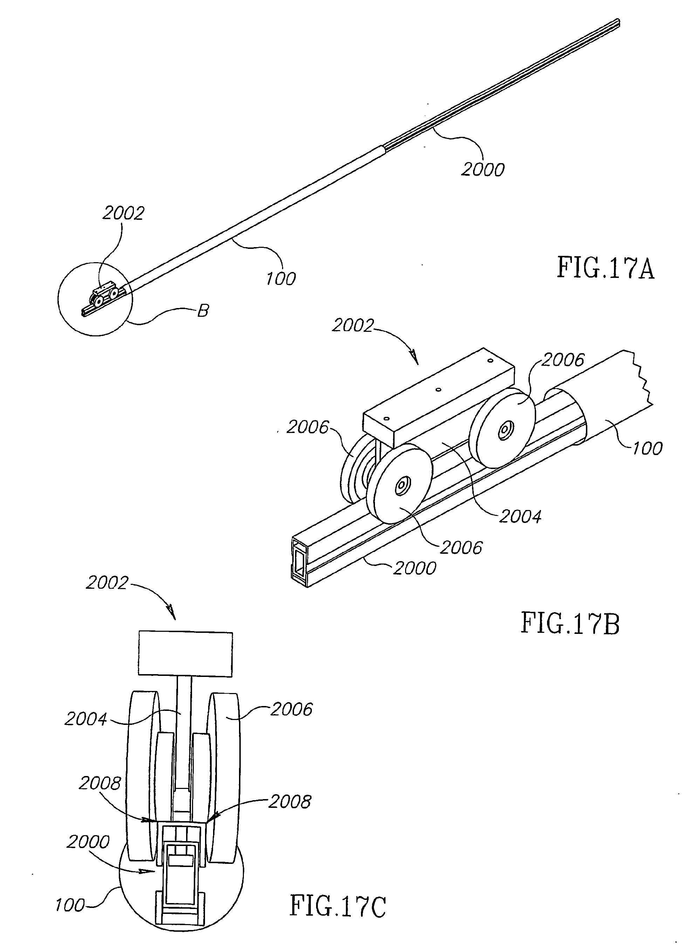

Referring now to Fig. 15C there is seen a portion of a compound duct 1148 which has both a cylindrical portion, referenced 100', substantially as shown and described above in conjunction with Figs. 1-3; and a square or rectangular portion, referenced 1100', substantially as shown and described above in conjunction with Figs. 13A-13B. The two differently shaped portions are connected via a transition portion 1150. Typically, compound duct 1148 is primarily cylindrical, and has a rectangular end portion so as to facilitate connection of the duct to the outlet ports of different types of gas emitting machines, wherein the outlet ports are square or rectangular. Use of the illustrated duct clearly avoids the necessity of unorthodox and sometimes unsafe connections, in order to connect a square or rectangular machine outlet to a cylindrical duct. The compound duct 1148 may be formed as described below in conjunction with Figs. 17A-17C, or by any other suitable method.

Referring now to Figs. 16-17C, the polygonal ducts of the present embodiment may be manufactured in substantially the same manner as shown and described hereinabove in conjunction with Figs. 7, 8, and 12, as may be observed from the first three steps of the flow chart of Fig. 16, which are identical to those described hereinabove in conjunction with Fig. 12. In the present embodiment however, the cylindrical duct which results from the hitherto described method of manufacture, is converted, either wholly or partially, into a polygonal duct, preferably square or rectangular, as shown at 1100' in Fig. 16.

Referring now to Figs. 17A-17C, conversion of a length of cylindrical duct 100 may be achieved by mounting a length thereof onto an expanding metal profile 2000, having an external shape adapted to expand to the shape and size desired. Once the duct 100 is mounted onto profile 2000, the profile is operated as known in the art, so as to expand against the interior surface of the round duct, thereby to deform it into a predetermined shape. As seen in the drawings, it may also be desired to complement the outward deformation forces applied from the interior of the duct by the expanding metal profile 2000, by external deformation forces, such as may be provided by trolley 2002. Trolley 2002 comprises a chassis 2004, onto which are mounted a plurality of cylindrical wheels 2006 which, as seen in Fig. 17C, define, together with wheels 2006, internal right-angled profiles 2008. As trolley 2002 travels along the profile 2000 and then engages duct 100, the duct is stretched both from the interior by profile 2000, and is also squeezed between the profile 2000 and the inward-facing right-angled profiles of trolley 2002, thereby to impart to the duct a desired polygonal shape. In the present example, this shape is rectangular, but this is by way of example only, as it could be any desired shape, whether rectangular, or any other type of polygon. In accordance with an alternative embodiment of the invention, there may be provided an additional trolley in order to properly form the bottom corners of the polygonal duct.

Clearly, also in accordance with the present invention, and referring also to Fig. 15C, in the event that a cylindrical duct is to remain cylindrical but with a square or rectangular end only, such as for connection purposes to the outlet of a gas emitting machine, this will be done by mounting only that portion of the duct desired to be transformed, onto the expanding profile, thereby to obtain a rectangular or square portion, referenced 1100' in Fig. 15C.

It will further be appreciated by persons skilled in the art that the scope of the present invention is not limited by what has been specifically shown and described hereinabove, merely by way of example. Rather, the scope of the present invention is defined solely by the claims, which follow.

## Claims

1. A semi-rigid, flexible duct (100) which includes:
a pair of coaxial sleeves (220,230), including an inner sleeve (220) and an outer sleeve (230) disposed parallel to and about said inner sleeve (220) ; and
a resilient wound wire element (250) disposed between said inner sleeve (220) and said outer sleeve (230),
wherein said inner sleeve (220) includes an internal first layer of aluminum ribbon (222) of predetermined thickness and an external second layer of polyester ribbon (224) of predetermined thickness forming a first two-layer continuous laminated tape,
said outer sleeve (230) includes an internal first layer of polyester ribbon (234) of predetermined thickness and an external second layer of aluminum ribbon (232) of predetermined thickness forming a second two-layer continuous laminated tape,
wherein said wound wire element (250) imparts corrugations to said inner sleeve (220) and said outer sleeve (230), such that said duct (100) is axially extendible between a compacted configuration suitable for storage and for shipping and an extended configuration suitable for installation in a gas transport arrangement,
**characterized in that** said inner sleeve (220) is formed of a wound wrapping of the first two-layer continuous laminated tape with a predetermined overlap (828) around a mandrel (710) with the first aluminum ribbon (222) facing inward toward the mandrel (710) and the first polyester ribbon (224) facing outward with respect to the mandrel (710), and
said outer sleeve (230) is formed of a wound wrapping of the second two-layer continuous laminated tape with a predetermined overlap (848) around the inner two-layer sleeve (220) and the wound wire element (250) with the second polyester ribbon (234) facing inward toward the mandrel (710) and the second aluminum ribbon (232) facing outward with respect to the mandrel (710),
whereby all said layers (222,224,232,234) of both said inner sleeve (220) and said outer sleeve (230) are of a thickness and overlap (828, 848) predetermined to together render said duct (100) substantially rigid when in said extended configuration and to together enable said duct (100) to maintain its substantial rigidity upon extension from said compacted configuration.

2. A duct according to Claim 1, **characterized in that** the polyester layer (224, 234) of each of said inner sleeve (220) and said outer sleeve (230) is bonded to said aluminum layer (222, 232), forming thereby, respectively, the inner two-layer laminate (220) and the outer two-layer laminate (230).

3. The duct of claim 1, **characterized in that** , when a predetermined length L of said duct (100), of diameter d, is in the extended configuration and is disposed horizontally and supported at both ends thereof, said duct is operative to bend under the influence of gravitational force such that the central portion thereof is lower than the level of said supported ends by no more than c, such that (c/L) × 100 ≤ q, wherein q is a predetermined percentage of L.

4. A duct according to Claim 2, **characterized in** including at least one of the following:
a) wherein both said inner two-layer laminate (220) and said outer two-layer laminate (230) are fabricated of fire-resistant materials and wherein said polyester layers (224 ,234) of both said inner two-layer laminate (220) and said outer two-layer laminate (230) are fabricated of puncture-resistant materials;
b) wherein, said polyester layer (224 ,234) of both said inner two- layer laminate (220) and said outer two-layer laminate (230) is bonded to said aluminum layer (222 ,232) thereof with a fire- retardant adhesive and said inner two-layer laminate (220) is bonded to said outer two-layer laminate (230) with a fire-retardant adhesive; and
c) wherein said first layers (222 ,232) of said inner two-layer laminate (220) and said outer two-layer laminate (230) are fabricated of aluminum ribbon of predetermined thicknesses and said second, plastic layers (224 ,234) of said inner two-layer laminate (220) and said outer two- layer laminate (230) are fabricated of polyester ribbon of predetermined thicknesses, and wherein said aluminum ribbon of said inner two-layer laminate (220) is bonded to said polyester ribbon to form an inner two-layer laminated tape of predetermined thickness, and said aluminum ribbon of said outer two-layer laminate (230) is bonded to said polyester ribbon thereof so as to form an outer two- layer laminated tape of predetermined thickness, and wherein said inner two-layer laminate (220) is an inner wound wrapping with a predetermined overlap of said inner two-layer laminated tape and said outer two-layer laminate (230) is an outer wound wrapping with a predetermined overlap of said outer two-layer laminated tape.

5. A duct according to Claim 4, **characterized in that** said resilient wound element (250) is aligned with said inner wound wrapping so as to be approximately centered over said overlap (828) of said inner wound wrapping of said inner two-layer laminated tape, and said outer wound wrapping of said outer two-layer laminated tape is aligned with said resilient wound element (250) so that said overlap (848) of said outer wound wrapping of said outer two-layer laminated tape is approximately centered over the spaces between the windings of said resilient wound element (250).

6. A duct according to Claim 1, **characterized in** further including an insulating sheath (470) , disposed parallel to and about said outer sleeve (430), and an enclosing jacket (490) disposed parallel to and about said insulating sheath (470).

7. A duct according to Claim 6, **characterized in that** said enclosing jacket (490) is a multi-layer jacket including a tubular, plastic inner wrapping (484) and a two-layer laminate outer wrapping (492, 494) disposed parallel thereto and thereabout and bonded thereto,
and wherein said two-layer laminate outer wrapping (492, 494) includes a plastic inner layer (494) and an outer layer (492) having metallic properties, bonded together.

8. A duct according to Claim 7, **characterized in that** said plastic inner wrapping (484) is fabricated of polyester ribbon of predetermined thickness and wherein said plastic inner layer (494) of said two-layer laminate outer wrapping (492, 494) is fabricated of polyester ribbon of predetermined thickness and said outer layer (492) having metallic properties of said two-layer laminate outer wrapping (492, 494) is fabricated of aluminum ribbon of predetermined thickness.

9. A duct according to Claim 8, **characterized in that** said tubular, plastic inner wrapping (484) and said two-layer laminate outer wrapping (492, 494) are bonded together with a fire-retardant adhesive and wherein said polyester ribbon and said aluminum ribbon of said two-layer laminate outer wrapping (492, 494) are bonded together with a fire-retardant adhesive.

10. A duct according to claim 1, **characterized in that** said duct has a cross-sectional configuration selected from the group which consists of:
circular;
rectangular;
and polygonal.

11. A method for manufacturing a semi-rigid, flexible duct (100), including the steps of;
a) providing a mandrel (710) of preselected diameter for fabricating a duct (100) therearound;
b) combining a first continuous aluminum ribbon (222) of predetermined thickness with a first continuous polyester ribbon (224) of predetermined thickness to form a first continuous two-layer laminated tape;
c) combining a second continuous aluminum ribbon (232) of predetermined thickness with a second continuous polyester ribbon (234) of predetermined thickness to form a second continuous two-layer laminated tape;
d) wrapping the first two-layer laminated continuous tape with a predetermined overlap (828) around the mandrel (710) with the first aluminum ribbon (222) facing inward toward the mandrel (710) and the first polyester ribbon (224) facing outward with respect to the mandrel (710) to form an inner two-layer sleeve (220) ;
e) winding a wire (250) around the inner two-layer sleeve (220); and
f) wrapping the second two-layer laminated continuous tape with a predetermined overlap (848) around the inner two-layer sleeve (220) and the wire winding (250) with the second polyester ribbon (234) facing inward toward the mandrel and the second aluminum ribbon (232) facing outward with respect to the mandrel (710) to form an outer two-layer sleeve (230) disposed parallel to and about the inner two-layer sleeve (220), thereby to form a duct (100).

12. A method according to Claim 11, including at least one of the following:
A. said step b) of combining a first aluminum ribbon (222) includes the sub-step of applying a fire-retardant adhesive between the first aluminum ribbon (222) and the first polyester ribbon (224) to bond them together; and wherein said step c) of combining a second aluminum ribbon (232) includes the sub-step of applying a fire-retardant adhesive between the second aluminum ribbon (232) and the second polyester ribbon (234) to bond them together;
B. in said step f) of wrapping the second two-layer laminated continuous tape, the outer two-layer sleeve (230) is bonded to the inner two-layer sleeve (220) using a fire-retardant adhesive with the wire wound (250) around the outer two-layer sleeve (230) and the inner two-layer sleeve (220);
C. after said step f) of winding the second two-layer laminated continuous tape, the steps of:
g) sheathing the outer two-layer sleeve (430) with a fiberglass insulating sheath (470), disposed parallel thereto and thereabout; and
h) enveloping the insulating sheath (470)with an enclosing jacket (490) ;
D. said step e) of winding a wire (250) includes the sub-step of aligning the wire (250) with the overlap (828) of the first two-layer laminated continuous tape so that the wire (250) is approximately centered over the overlap (828) of the first two-layer laminated continuous tape, and wherein said step f) of wrapping the second two-layer laminated continuous tape includes the sub-step of aligning the second two-layer laminated continuous tape so that the overlap (848) thereof is approximately centered over the spaces between the wire windings (250);
E. said step d) of winding the first two-layer laminated continuous tape, said step e) of winding the wire (250), and said step f) of winding the second two-layer laminated continuous tape, are performed by rotating the mandrel (710) as the first two-layer laminated continuous tape, the wire (250), and the second two-layer laminated continuous tape are respectively taken up by the mandrel (710), continuously and with predetermined phase differences therebetween, with respect to the rotation of the mandrel (710).

13. A method according to Claim 12E, wherein said step d) of winding the first two-layer laminated continuous tape and said step e) of winding the wire are performed continuously and with a first preselected phase difference therebetween, with respect to the rotation of the mandrel (710) ; and wherein said step e) of winding the wire (250) and said step f) of winding the second two-layer laminated continuous tape are performed continuously and with a second preselected phase difference therebetween, with respect to the rotation of the mandrel (710).

14. A method according to Claim 12C, wherein said step h) of enveloping includes the following sub-steps:
i) providing a mandrel of preselected diameter for fabricating the enclosing jacket (490) therearound;
ii) combining a polyester continuous ribbon (494) of predetermined thickness with an aluminum continuous ribbon (492) of predetermined thickness to form a two-layer laminated continuous tape;
iii) wrapping a continuous polyester ribbon (484) of predetermined thickness around the mandrel to form an inner plastic sleeve; and
iv) wrapping the continuous two-layer laminated tape around the inner plastic sleeve (484) with the polyester ribbon (494) facing inward toward the mandrel and the aluminum ribbon (492) facing outwardly with respect to the mandrel to form an outer two-layer sleeve disposed parallel to and about the inner plastic sleeve.

15. A method according to Claim 14, including at least one of the following:
A. said sub-step ii) of combining includes the sub-sub-step of applying a fire-retardant adhesive (485) between the polyester ribbon (484) and the aluminum ribbon (492) of the continuous two-layer laminated tape to bond them together;
B. said sub-step iii) of winding a polyester ribbon (484) includes the sub-sub-step of coating the outer face of the inner plastic sleeve with a fire- retardant adhesive (485) to bond it to the two-layer laminated tape.

16. A method according to Claim 14, wherein said sub-step iii) of wrapping a polyester ribbon (484) and said sub-step iv) of or wrapping the two-layer laminated tape are performed by rotating the mandrel as the polyester ribbon (484) and the two-layer laminated tape are respectively taken up by the mandrel, continuously and with a predetermined phase difference therebetween, with respect to the rotation of the mandrel.

17. A method according to claim 11, and also including the additional step of imparting a square or rectangular cross-sectional configuration to at least a portion of the duct (100).

## Patentansprüche

1. Halbsteifer elastischer Kanal (100), der enthält:
ein Paar koaxialer Muffen (220, 230), enthaltend eine Innenmuffe (220) und eine Außenmuffe (230), die parallel zur Innenmuffe (220) und um diese angeordnet ist; und
ein biegsames gewickeltes Drahtelement (250), das zwischen der Innenmuffe (220) und der Außenmuffe (230) angeordnet ist;
wobei die Innenmuffe (220) eine innere erste Schicht aus Aluminiumband (222) vorab definierter Dicke und eine äußere zweite Schicht aus Polyesterband (224) vorab definierter Dicke aufweist, die ein erstes zweischichtiges durchgängiges laminiertes Band bilden,
wobei die Außenmuffe (230) eine innere erste Schicht aus Polyesterband (234) vorab definierter Dicke und eine äußere zweite Schicht aus Aluminiumband (232) vorab definierter Dicke aufweist, die ein zweites zweischichtiges durchgängiges laminiertes Band bilden,
wobei das gewickelte Drahtelement (250) der Innenmuffe (220) und der Außenmuffe (230) Wellen verleiht, so dass der Kanal (100) zwischen einer eingezogenen Konfiguration, die sich zur Lagerung und zum Transport eignet, und einer ausgezogenen Konfiguration, die sich zur Installation in einer Gastransportanordnung eignet, axial erweiterbar ist,
**dadurch gekennzeichnet, dass** die Innenmuffe (220) aus einer gewickelten Umpackung aus dem ersten zweischichtigen durchgängigen laminierten Band mit einer vorab definierten Überlappung (828) um einen Dorn (710) gebildet ist, wobei das erste Aluminiumband (222) dem Dorn (710) einwärts zugewandt ist und das erste Polyesterband (224) in Bezug auf den Dorn (710) nach außen gerichtet ist, und
die Außenmuffe (230) aus einer gewickelten Umpackung des zweiten zweischichtigen durchgängigen laminierten Bandes mit einer vorab definierten Überlappung (848) um die zweischichtige Innenmuffe (220) und dem gewickelten Drahtelement (250) gebildet ist, wobei das zweite Polyesterband (234) dem Dorn (710) einwärts zugewandt ist und das zweite Aluminiumband (232) in Bezug auf den Dorn (710) nach außen gerichtet ist,
wobei alle Schichten (222, 224, 232, 234) sowohl der Innenmuffe (220) als auch der Außenmuffe (230) eine Dicke und eine Überlappung (828, 848) aufweisen, die vorab definiert sind, um den Kanal (100) gemeinsam im Wesentlichen steif zu machen, wenn sich dieser in der ausgezogenen Konfiguration befindet, und um gemeinsam zu ermöglichen, dass der Kanal (100) seine wesentliche Steifheit beim Ausziehen aus der eingezogenen Konfiguration behält.

2. Kanal nach Anspruch 1, **dadurch gekennzeichnet, dass** die Polyesterschicht (224, 234) von jedem der Innenmuffe (220) und der Außenmuffe (230) an die Aluminiumschicht (222, 232) gebunden ist, wodurch das innere zweischichtige Laminat (220) bzw. das äußere zweischichtige Laminat (230) gebildet werden.

3. Kanal nach Anspruch 1, **dadurch gekennzeichnet, dass** der Kanal, wenn eine vorab definierte Länge L des Kanals (100) mit einem Durchmesser d in der ausgezogenen Konfiguration und horizontal angeordnet und an beiden Enden davon getragen wird, betreibbar ist, um sich unter Einwirkung der Gravitationskraft zu biegen, so dass der Mittelteil davon um nicht mehr als c niedriger als die Ebene der getragenen Enden ist, so dass (c/L)*100 ≤ q, wobei q ein vorab definierter Prozentsatz von L ist.

4. Kanal nach Anspruch 2, **dadurch gekennzeichnet, dass** zumindest eines des Folgendes umfaßt ist:
a) wobei sowohl das innere zweischichtige Laminat (220) als auch das äußere zweischichtige Laminat (230) aus feuerfesten Materialien hergestellt sind, und wobei die Polyesterschichten (224, 234) sowohl des inneren zweischichtigen Laminats (220) als auch des äußeren zweischichtigen Laminats (230) aus durchstoßfesten Materialien hergestellt sind;
b) wobei die Polyesterschicht (224, 234) sowohl des inneren zweischichtigen Laminats (220) als auch des äußeren zweischichtigen Laminats (230) mithilfe eines feuerfesten Klebstoffs an die Aluminiumschicht (222, 232) davon gebunden ist, und wobei das innere zweischichtige Laminat (220) mithilfe eines feuerbeständigen Klebstoffs an das äußere zweischichtige Laminat (230) gebunden ist; und
c) wobei die ersten Schichten (222, 232) des inneren zweischichtigen Laminats (220) und des äußeren zweischichtigen Laminats (230) aus Aluminiumband vorab definierter Dicken hergestellt sind, und wobei die zweiten Kunststoffschichten (224, 234) des inneren zweischichtigen Laminats (220) und des äußeren zweischichtigen Laminats (230) aus Polyesterband vorab definierter Dicken hergestellt sind, und wobei das Aluminiumband des inneren zweischichtigen Laminats (220) an das Polyesterband gebunden ist, um ein inneres zweischichtiges laminiertes Band vorab definierter Dicke zu bilden, und wobei das Aluminiumband des äußeren zweischichtigen Laminats (230) an das Polyesterband davon gebunden ist, um ein äußeres zweischichtiges laminiertes Band vorab definierter Dicke zu bilden, und wobei das innere zweischichtige Laminat (220) eine innere gewickelte Umpackung mit einer vorab definierter Überlappung des inneren zweischichtigen laminierten Bandes ist, und wobei das äußere zweischichtige Laminat (230) eine äußere gewickelte Umpackung mit einer vorab definierten Überlappung des äußeren zweischichtigen laminierten Bandes ist.

5. Kanal nach Anspruch 4, **dadurch gekennzeichnet, dass** das biegsame gewickelte Element (250) mit der inneren gewickelten Umpackung ausgerichtet ist, um über der Überlappung (828) der inneren gewickelten Umpackung des inneren zweischichtigen laminierten Bandes ungefähr zentriert zu sein, und die äußere gewickelte Umpackung des äußeren zweischichtigen laminierten Bandes mit dem biegsamen gewickelten Element (250) ausgerichtet ist, so dass die Überlappung (848) der äußeren gewickelten Umpackung des äußeren zweischichtigen laminierten Bandes über den Räumen zwischen den Wicklungen des biegsamen gewickelten Elements (250) ungefähr zentriert ist.

6. Kanal nach Anspruch 1, **dadurch gekennzeichnet, dass** er ferner eine Isolierummantelung (470), die parallel zu der Außenmuffe (430) und um diese angeordnet ist, und einen umschließenden Mantel (490) enthält, der parallel zur Isolierummantelung (470) und um diese angeordnet ist.

7. Kanal nach Anspruch 6, **dadurch gekennzeichnet, dass** der umschließende Mantel (490) ein mehrschichtiger Mantel ist, der eine rohrförmige innere Kunststoffumpackung (484) und eine zweischichtige äußerere laminierte Umpackung (492, 494) enthält, parallel dazu und um diesen angeordnet und an diesen gebunden, und wobei die zweischichtige laminierte äußere Umpackung (492, 494) eine innere Kunststoffschicht (494) und eine äußere Schicht (492) mit metallischen Eigenschaften aufweist, die miteinander verbunden sind.

8. Kanal nach Anspruch 7, **dadurch gekennzeichnet, dass** die innere Kunststoffumpackung (484) aus Polyesterband vorab definierter Dicke hergestellt ist, und wobei die innere Kunststoffschicht (494) der zweischichtigen laminierten äußeren Umpackung (492, 494) aus Polyesterband vorab definierter Dicke hergestellt ist, und wobei die äußere Schicht (492) mit metallischen Eigenschaften der zweischichtigen laminierten äußeren Umpackung (492, 494) aus Aluminiumband vorab definierter Dicke hergestellt ist.

9. Kanal nach Anspruch 8, **dadurch gekennzeichnet, dass** die rohrförmige innere Kunststoffumpackung (484) und die zweischichtige laminierte äußere Umpackung (492, 494) mithilfe eines feuerfesten Klebstoffs miteinander verbunden sind, und wobei das Polyesterband und das Aluminiumband der zweischichtigen laminierten äußeren Umpackung (492, 494) mithilfe eines feuerfesten Klebstoffs miteinander verbunden sind.

10. Kanal nach Anspruch 1, **dadurch gekennzeichnet, dass** der Kanal eine Querschnittskonfiguration aufweist, ausgewählt aus der Gruppe bestehend aus:
kreisförmig;
rechteckig;
und polygonal.

11. Verfahren zum Herstellen eines halbsteifen elastischen Kanals (100), umfassend die folgenden Schritte:
a) Bereitstellen eines Dorns (710) mit einem vorab ausgewählten Durchmesser zur Herstellung eines Kanals (100) um diesen herum;
b) Kombinierten eines ersten durchgängigen Aluminiumbandes (222) vorab definierter Dicke mit einem ersten durchgängigen Polyesterband (224) vorab definierter Dicke, um ein erstes durchgängiges zweischichtiges laminiertes Band zu bilden;
c) Kombinieren eines zweiten durchgängigen Aluminiumbandes (232) vorab definierter Dicke mit einem zweiten durchgängigen Polyesterband (234) vorab definierter Dicke, um ein zweites durchgängiges zweischichtiges laminiertes Band zu bilden;
d) Wickeln des ersten zweischichtigen laminierten durchgängigen Bands mit einer vorab definierten Überlappung (828) um den Dorn (710), wobei das erste Aluminiumband (222) dem Dorn (710) einwärts zugewandt ist, und wobei das erste Polyesterband (224) in Bezug auf den Dorn (710) nach außen gerichtet ist, um eine zweischichtige Innenmuffe (220) zu bilden;
e) Wickeln eines Drahts (250) um die zweischichtige Innenmuffe (220); und
f) Wickeln des zweiten zweischichtigen laminierten durchgängigen Bandes mit einer vorab definierten Überlappung (848) um die zweischichtige Innenmuffe (220) und die Drahtwicklung (250), wobei das zweite Polyesterband (234) dem Dorn einwärts zugewandt ist, und wobei das zweite Aluminiumband (232) in Bezug auf den Dorn (710) nach außen gerichtet ist, um eine zweischichtige Außenmuffe (230) zu bilden, die parallel zur zweischichtigen Innenmuffe (220) und um diese angeordnet ist, um somit einen Kanal (100) zu bilden.

12. Verfahren nach Anspruch 11, umfassend zumindest eines des Folgenden:
A. Schritt b) des Kombinierens eines ersten Aluminiumbandes (222) enthält den Unterschritt des Auftragens eines feuerfesten Klebstoffs zwischen dem ersten Aluminiumband (222) und dem ersten Polyesterband (224), um diese miteinander zu verbinden; und wobei Schritt c) des Kombinierens eines zweiten Aluminiumbands (232) den Unterschritt des Auftragens eines feuerfesten Klebstoffs zwischen dem zweiten Aluminiumband (232) und dem zweiten Polyesterband (234) enthält, um diese miteinander zu verbinden;
B. die zweischichtige Außenmuffe (230) in Schritt f) des Wickelns des zweiten zweischichtigen laminierten durchgängigen Bandes mithilfe eines feuerfesten Klebstoffs mit der zweischichtigen Innenmuffe (220) verbunden wird, wobei der Draht (250) um die zweischichtige Außenmuffe (230) und die zweischichtige Innenmuffe (220) gewickelt wird;
C. nach Schritt f) des Wickelns des zweiten zweischichtigen laminierten durchgängigen Bandes die folgenden Schritte:
g) Ummanteln der zweischichtigen Außenmuffe (430) mit einer Fiberglasisolierungsummantelung (470), die parallel dazu und um diese angeordnet ist; und
h) Umschließen der Isolierungsummantelung (470) mit einem umschließenden Mantel (490);
D. Schritt e) des Wickelns eines Drahts (250) den Unterschritt des Ausrichtens des Drahts (250) mit der Überlappung (828) des ersten zweischichtigen laminierten durchgängigen Bandes enthält, so dass der Draht (250) über der Überlappung (828) des ersten zweischichtigen laminierten durchgängigen Bandes ungefähr zentriert ist, und wobei Schritt f) des Wickelns des zweiten zweischichtigen laminierten durchgängigen Bandes den Unterschritt des Ausrichtens des zweiten zweischichtigen laminierten durchgängigen Bandes enthält, so dass die Überlappung (848) davon über den Räumen zwischen den Drahtwicklungen (250) ungefähr zentriert ist;
E. Schritt d) des Wickelns des ersten zweischichtigen laminierten durchgängigen Bandes, Schritt e) des Wickelns des Drahts (250) und Schritt f) des Wickelns des zweiten zweischichtigen laminierten durchgängige Bandes durch Drehen des Dorns (710) durchgeführt werden, wenn das erste zweischichtige laminierte durchgängige Band, der Draht (250) und das zweite zweischichtige laminierte durchgängige Band jeweils vom Dorn (710) aufgenommen werden, kontinuierlich und mit vorab definierten Phasendifferenzen dazwischen in Bezug auf die Drehung des Dorns (710).

13. Verfahren nach Anspruch 12 E, wobei Schritt d) des Wickelns des ersten zweischichtigen laminierten durchgängigen Bandes und Schritt e) des Wickelns des Drahts kontinuierlich und mit einer ersten vorab ausgewählten Phasendifferenz dazwischen in Bezug auf die Drehung des Dorns (710) durchgeführt werden; und wobei Schritt e) des Wickelns des Drahts (250) und Schritt f) des Wickelns des zweiten zweischichtigen laminierten durchgängigen Bandes kontinuierlich und mit einer zweiten vorab ausgewählten Phasendifferenz dazwischen in Bezug auf die Drehung des Dorns (710) durchgeführt werden.

14. Verfahren nach Anspruch 12 C, wobei Schritt h) des Umschließens die folgenden Unterschritte umfasst:
i) Bereitstellen eines Dorns mit einem vorab ausgewählten Durchmesser zur Herstellung des umschließenden Mantels (490) um diesen herum;
ii) Kombinieren eines durchgängigen Polyesterbandes (494) vorab definierter Dicke mit einem durchgängigen Aluminiumband (492) vorab definierter Dicke, um ein zweischichtiges laminiertes durchgängiges Band zu bilden;
iii) Wickeln eines durchgängigen Polyesterbandes (484) vorab definierter Dicke um den Dorn, um eine Kunststoff-Innenmuffe zu bilden;
iv) Wickeln des durchgängigen zweischichtigen laminierten Bandes um die Kunststoff-Innenmuffe (484), wobei das Polyesterband (494) dem Dorn einwärts zugewandt ist und das Aluminiumband (492) in Bezug auf den Dorn nach außen gerichtet ist, um eine zweischichtige Außenmuffe zu bilden, die parallel zur Kunststoff-Innenmuffe und um diese angeordnet ist.

15. Verfahren nach Anspruch 14, umfassend zumindest eines des Folgenden:
A. Unterschritt ii) des Kombinierens enthält den Teilunterschritt des Auftragens eines feuerfesten Klebstoffs (485) zwischen dem Polyesterband (484) und dem Aluminiumband (492) des durchgängigen zweischichtigen laminierten Bandes, um diese miteinander zu verbinden;
B. Unterschritt iii) des Wickelns eines Polyesterbandes (484) enthält den Teilunterschritt des Beschichtens der Außenfläche der Kunststoff-Innenmuffe mit einem feuerfesten Klebstoff (485), um diese mit dem zweischichtigen laminierten Band zu verbinden.

16. Verfahren nach Anspruch 14, wobei der Unterschritt iii) des Wickelns eines Polyesterbandes (484) und der Unterschritt iv) des Wickelns des zweischichtigen laminierten Bandes durch Drehen des Dorns durchgeführt werden, wenn das Polyesterband (484) und das zweischichtige laminierte Band jeweils vom Dorn aufgenommen werden, kontinuierlich und mit einer vorab definierten Phasendifferenz dazwischen in Bezug auf die Drehung des Dorns.

17. Verfahren nach Anspruch 11, ferner umfassend den zusätzlichen Schritt des Anwendens einer viereckigen oder rechteckigen Querschnittskonfiguration auf zumindest einen Teil des Kanals (100).

## Revendications

1. Conduite flexible semi-rigide (100) qui comprend :
une paire de manchons coaxiaux (220, 230), comprenant un manchon interne (220) et un manchon externe (230) disposé parallèlement à et autour dudit manchon interne (220) ; et
un élément de fil métallique d'enroulement résilient (250) disposé entre ledit manchon interne (220) et ledit manchon externe (230),
dans laquelle ledit manchon interne (220) comprend une première couche interne de ruban d'aluminium (222) d'épaisseur prédéterminée et une deuxième couche externe de ruban de polyester (224) d'épaisseur prédéterminée formant une première bande stratifiée continue à deux couches,
ledit manchon externe (230) comprend une première couche interne de ruban de polyester (234) d'épaisseur prédéterminée et une deuxième couche externe de ruban d'aluminium (232) d'épaisseur prédéterminée formant une deuxième bande stratifiée continue à deux couches,
dans laquelle ledit élément de fil métallique enroulé (250) forme des ondulations sur ledit manchon interne (220) et ledit manchon externe (230), de sorte que ladite conduite (100) soit axialement extensible entre une configuration compactée adaptée pour le stockage et pour le transport et une configuration étendue adaptée pour installation dans un agencement de transport de gaz,
**caractérisé en ce que** ledit manchon interne (220) est formé d'une enveloppe enroulée de la première bande stratifiée continue à deux couches avec un chevauchement prédéterminé (828) autour d'un mandrin (710) avec le premier ruban d'aluminium (222) orienté vers l'intérieur vers le mandrin (710) et le premier ruban de polyester (224) orienté vers l'extérieur par rapport au mandrin (710), et
ledit manchon externe (230) est formé d'une enveloppe enroulée de la deuxième bande stratifiée continue à deux couches avec un chevauchement prédéterminé (848) autour du manchon à deux couches interne (220) et l'élément de fil métallique enroulé (250) avec le deuxième ruban de polyester (234) orienté vers l'intérieur vers le mandrin (710) et le deuxième ruban d'aluminium (232) orienté vers l'extérieur par rapport au mandrin (710),
de telle manière que toutes lesdites couches (222, 224, 232, 234) à la fois dudit manchon interne (220) et dudit manchon externe (230) sont d'une épaisseur et d'un chevauchement (828, 848) prédéterminé pour rendre conjointement ladite conduite (100) sensiblement rigide lorsqu'elle est dans ladite configuration étendue et pour permettre conjointement à ladite conduite (100) de maintenir sa rigidité substantielle après extension depuis ladite configuration compactée.

2. Conduite selon la revendication 1, **caractérisée en ce que** la couche de polyester (224, 234) de chacun dudit manchon interne (220) et dudit manchon externe (230) est fixé à ladite couche d'aluminium (222, 232), de manière à former, respectivement, le stratifié à deux couches interne (220) et le stratifié à deux couches externe (230).

3. Conduite de la revendication 1, **caractérisée en ce que**, lorsqu'une longueur prédéterminée L de ladite conduite (100), de diamètre d, est dans la configuration étendue et est disposée horizontalement et soutenue aux deux extrémités de celle-ci, ladite conduite est opérationnelle pour fléchir sous l'effet de la force de gravité de sorte que la partie centrale de celle-ci soit plus bas que le niveau desdites extrémités soutenues de pas plus de c, de sorte que (c/L) x 100 < q, où q est un pourcentage prédéterminé de L.

4. Conduite selon la revendication 2, **caractérisée en ce qu'**elle comprend au moins l'un des suivants :
a) où ledit stratifié à deux couches interne (220) et ledit stratifié à deux couches externe (230) sont tous deux constitués de matériaux ignifuges et où lesdites couches de polyester (224, 234) dudit stratifié à deux couches interne (220) et dudit stratifié à deux couches externe (230) sont tous deux constituées de matériaux résistants aux piqûres ;
b) où, ladite couche de polyester (224, 234) dudit stratifié à deux couches interne (220) et dudit stratifié à deux couches externe (230) est fixée à ladite couche d'aluminium (222, 232) de celui-ci avec un adhésif ignifuge et ledit stratifié à deux couches interne (220) est fixé audit stratifié à deux couches externe (230) avec un adhésif ignifuge; et
c) où lesdites premières couches (222, 232) dudit stratifié à deux couches interne (220) et dudit stratifié à deux couches externe (230) sont fabriquées en ruban d'aluminium d'épaisseurs prédéterminées et lesdites deuxièmes couches en plastique (224, 234) dudit stratifié à deux couches interne (220) et dudit stratifié à deux couches externe (230) sont constituées de ruban de polyester d'épaisseurs prédéterminées, et où ledit ruban d'aluminium dudit stratifié à deux couches interne (220) est fixé audit ruban de polyester pour former une bande stratifiée à deux couches interne d'épaisseur prédéterminée, et ledit ruban d'aluminium dudit stratifié à deux couches externe (230) est fixé audit ruban de polyester de celui-ci de manière à former une bande stratifiée à deux couches externe d'épaisseur prédéterminée, et où ledit stratifié à deux couches interne (220) est une enveloppe enroulée interne avec un chevauchement prédéterminé de ladite bande stratifiée à deux couches interne et dudit stratifié à deux couches externe (230) est une enveloppe enroulée externe avec un chevauchement prédéterminé de ladite bande stratifiée à deux couches externe.

5. Conduite selon la revendication 4, **caractérisée en ce que** ledit élément enroulé résilient (250) est aligné avec ladite enveloppe enroulée interne de manière à être approximativement centré sur ledit chevauchement (828) de ladite enveloppe enroulée interne de ladite bande stratifiée à deux couches interne, et ladite enveloppe enroulée externe de ladite bande stratifiée à deux couches externe est alignée avec ledit élément enroulé résilient (250) de sorte que ledit chevauchement (848) de ladite enveloppe enroulée externe de ladite bande stratifiée à deux couches externe soit approximativement centré sur les espaces entre les enroulements dudit élément enroulé résilient (250).

6. Conduite selon la revendication 1, **caractérisée en ce qu'**elle comprend en outre une gaine isolante (470), disposée parallèlement à et autour dudit manchon externe (430), et une chemise d'enceinte (490) disposée parallèlement à et autour de ladite gaine isolante (470).

7. Conduite selon la revendication 6, **caractérisée en ce que** ladite chemise d'enceinte (490) est une chemise multicouche comprenant une enveloppe interne en plastique tubulaire (484) et une enveloppe externe stratifiée à deux couches (492, 494) disposée parallèlement à celle-ci et autour de celle-ci et fixée à celle-ci,
et ou ladite enveloppe externe stratifiée à deux couches (492,494) comprend une couche interne en plastique (494) et une couche externe (492) ayant des propriétés métalliques, fixées conjointement.

8. Conduite selon la revendication 7, **caractérisée en ce que** ladite enveloppe interne en plastique (484) est constituée d'un ruban de polyester d'épaisseur prédéterminée et où ladite couche interne en plastique (494) de ladite enveloppe stratifiée à deux couches (492,494) est constituée d'un ruban de polyester d'épaisseur prédéterminée et ladite couche externe (492) ayant des propriétés métalliques de ladite enveloppe externe stratifiée à deux couches (492, 494) est constituée d'un ruban d'aluminium d'épaisseur prédéterminée.

9. Conduite selon la revendication 8, **caractérisée en ce que** ladite enveloppe interne en plastique tubulaire (484) et ladite enveloppe stratifiée à deux couches externe (492, 494) sont fixées conjointement avec un adhésif ignifuge et où ledit ruban de polyester et ledit ruban d'aluminium de ladite enveloppe externe stratifiée à deux couches (492, 494) sont fixés conjointement avec un adhésif ignifuge.

10. Conduite selon la revendication 1, **caractérisée en ce que** ladite conduite a une configuration de section transversale choisie dans le groupe constituée de :
circulaire ;
rectangulaire ;
et polygonale.

11. Procédé pour fabriquer une conduite flexible, semi-rigide (100), comprenant les étapes consistant à :
a) produire un mandrin (710) de diamètre présélectionné pour fabriquer une conduite (100) autour de celui-ci ;
b) combiner un premier ruban d'aluminium continu (222) d'épaisseur prédéterminée avec un premier ruban de polyester continu (224) d'épaisseur prédéterminée pour former une première bande stratifiée à deux couches continue ;
c) combiner un deuxième ruban d'aluminium continu (232) d'épaisseur prédéterminée avec un deuxième ruban de polyester continu (234) d'épaisseur prédéterminée pour former une deuxième bande stratifiée à deux couches continue ;
d) envelopper la première bande continue stratifiée à deux couches avec un chevauchement prédéterminé (828) autour du mandrin (710) avec le premier ruban d'aluminium (222) orienté vers l'intérieur vers le mandrin (710) et le premier ruban de polyester (224) orienté vers l'extérieur par rapport au mandrin (710) pour former un manchon à deux couches interne (220) ;
e) enrouler un fil métallique (250) autour du manchon à deux couches interne (220) ; et
f) envelopper la deuxième bande continue stratifiée à deux couches avec un chevauchement prédéterminé (848) autour du manchon à deux couches interne (220) et de l'enroulement de fil métallique (250) avec le deuxième ruban de polyester (234) orienté vers l'intérieur vers le mandrin et le deuxième ruban d'aluminium (232) orienté vers l'extérieur par rapport au mandrin (710) pour former un manchon à deux couches externe (230) disposé parallèlement à et autour du manchon à deux couches interne (220), de manière à former une conduite (100).

12. Procédé selon la revendication 11, comprenant au moins un des suivants :
A. ladite étape b) de combinaison d'un premier ruban d'aluminium (222) comprend la sous-étape d'application d'un adhésif ignifuge entre le premier ruban d'aluminium (222) et le premier ruban de polyester (224) pour fixer ceux-ci conjointement ; et où ladite étape c) de combinaison d'un deuxième ruban d'aluminium (232) comprend la sous-étape d'application d'un adhésif ignifuge entre le deuxième ruban d'aluminium (232) et le deuxième ruban de polyester (234) pour fixer conjointement ceux-ci ;
B. dans ladite étape f) d'enveloppement de la deuxième bande continue stratifiée à deux couches, le manchon à deux couches externe (230) est fixé au manchon à deux couches interne (220) en utilisant un adhésif ignifuge avec le fil métallique enroulé (250) autour du manchon à deux couches externe (230) et du manchon à deux couches interne (220) ;
C. après ladite étape f) d'enroulement de la deuxième bande continue stratifiée à deux couches, les étapes consistant à :
g) gainer le manchon à deux couches externe (430) avec une gaine isolante de fibre de verre (470), disposée parallèlement à celle-ci et autour de celle-ci ; et
h) envelopper la gaine isolante (470) avec une chemise d'enceinte (490) ;
D. ladite étape e) d'enroulement d'un fil métallique (250) comprend la sous-étape d'alignement du fil métallique (250) avec le chevauchement (828) de la première bande continue stratifiée à deux couches de sorte que le fil métallique (250) soit approximativement centré sur le chevauchement (828) de la première bande continue stratifiée à deux couches, et où ladite étape f) d'enveloppement de la deuxième bande continue stratifiée à deux couches comprend la sous-étape d'alignement de la deuxième bande continue stratifiée à deux couches de sorte que le chevauchement (848) de celui-ci soit approximativement centré sur les espaces entre les enroulements de fil métallique (250) ;
E. ladite étape d) d'enroulement de la première bande continue stratifiée à deux couches, ladite étape e) d'enroulement du fil métallique (250), et ladite étape f) d'enroulement de la deuxième bande continue stratifiée à deux couches, sont conduites par rotation du mandrin (710) au fur et à mesure que la première bande continue stratifiée à deux couches, le fil métallique (250), et la deuxième bande continue stratifiée à deux couches sont respectivement capturés par le mandrin (710), en continu et avec des déphasages prédéterminés entre ceux-ci, par rapport à la rotation du mandrin (710).

13. Procédé selon la revendication 12E, dans lequel ladite étape d) d'enroulement de la première bande continue stratifiée à deux couches et ladite étape e) d'enroulement du fil métallique sont conduites en continu et avec un premier déphasage présélectionné, par rapport à la rotation du mandrin (710) ; et où ladite étape e) d'enroulement du fil métallique (250) et ladite étape d'enroulement de la deuxième bande continue stratifiée à deux couches sont effectuées en continu et avec un deuxième déphasage présélectionné entre celles-ci, par rapport à la rotation du mandrin (710).

14. Procédé selon la revendication 12C, dans lequel ladite étape h) d'enveloppement comprend les sous-étapes suivantes consistant à :
i) produire un mandrin de diamètre présélectionné pour fabriquer la chemise d'enceinte (490) autour de celui-ci ;
ii) combiner un ruban continu de polyester (494) d'épaisseur prédéterminée avec un ruban continu d'aluminium (492) d'épaisseur prédéterminée pour former une bande continue stratifiée à deux couches ;
iii) envelopper un ruban continu de polyester (484) d'épaisseur prédéterminée autour du mandrin pour former un manchon en plastique interne ; et
iv) envelopper la bande stratifiée à deux couches continue autour du manchon en plastique interne (484) avec le ruban de polyester (494) orienté vers l'intérieur vers le mandrin et le ruban d'aluminium (492) orienté vers l'extérieur par rapport au mandrin pour former un manchon à deux couches externe disposé parallèlement à et autour du manchon en plastique interne.

15. Procédé selon la revendication 14, comprenant au moins un des suivants
A. ladite sous-étape ii) de combinaison comprend la sous-sous-étape d'application d'un adhésif ignifuge (485) entre le ruban de polyester (424) et le ruban d'aluminium (492) de la bande stratifiée à deux couches continue pour fixer conjointement ceux-ci ;
B. ladite sous-étape iii) d'enroulement d'un ruban de polyester (484) comprend la sous-sous-étape d'enduction de la face externe du manchon en plastique interne avec un adhésif ignifuge (485) pour fixer celui-ci à la bande stratifiée à deux couches.

16. Procédé selon la revendication 14, dans lequel ladite sous-étape iii) d'enveloppement d'un ruban de polyester (484) et ladite sous-étape iv) d'enveloppement de la bande stratifiée à deux couches sont effectuées par rotation du mandrin au fur et à mesure que le ruban de polyester (484) et la bande stratifiée à deux couches sont respectivement capturées par le mandrin, en continu et avec un déphasage prédéterminé entre ceux-ci, par rapport à la rotation du mandrin.

17. Procédé selon la revendication 11, et comprenant en outre l'étape additionnelle consistant à conférer une configuration de section transversale carrée ou rectangulaire à au moins une partie de la conduite (100).
